# EUROPEAN PATENT SPECIFICATION

(11) **EP 1 988 709 B1**
(45) Date of publication and mention of the grant of the patent: **19.12.2012**
(21) Application number: 07714481.4
(22) Date of filing: 19.02.2007
(51) Int. Cl.: H04N 5/45, H04N 5/60, H04N 7/16, H04N 21/443, H04N 21/431, H04N 21/426, H04N 21/422

(54) **DISPLAY CONTROL DEVICE, DISPLAY CONTROL METHOD, AND DISPLAY CONTROL PROGRAM**
ANZEIGESTEUEREINRICHTUNG, ANZEIGESTEUERVERFAHREN UND ANZEIGESTEUERPROGRAMM
DISPOSITIF, PROCEDE ET PROGRAMME DE CONTROLE D'AFFICHAGE

(30) Priority: 21.02.2006 JP 2006043364
(43) Date of publication of application: 05.11.2008
(73) Proprietor: Panasonic Corporation, Kadoma-shi Osaka 571-8501 (JP)
(72) Inventor: KATAOKA, Mitsuteru, Osaka 540-6207 (JP); MORITA, Takuya, Osaka 540-6207 (JP); SASAKI, Hirokazu, Osaka 540-6207 (JP)
(74) Representative: TBK
(86) International application number: PCT/JP2007/052955
(87) International publication number: WO 2007/097280

(56) References cited:
- "TOSHIBA Toshiba Chijo BS 110 Do CS Digital Hi-Vision Ekisho Television Toriatsukai Setsumeisho Katamei 26L400V, 32L400V", INTERNET CITATION, 18 February 2004 (2004-02-18), XP003017312, Retrieved from the Internet: URL:http://www.toshiba-living.jp/rev.php?n o=31438&sid=1&1v=3&YN=Y [retrieved on 2007-01-01]
- 'SONY WEGA Digital Television Toriatsukai Setsumeisho KDL-L26HVX KDL-L32HVX KDL-L40HVX KDE-P42HVX KDE-P50HVX' SOSA KOMATTAKOKI WA HEN HATSUBAIBI, [Online] 20 September 2004, page 41, 97, XP003017310 Retrieved from the Internet: <URL:http://www.cgi.sonydrive.jp/pdf_sd/Ser viceArea/impdf/TVLCD.html>
- 'SONY LCD WEGA digital Hi-Vision Ekisho Digital Television Toriatsukai Setsumeisho KDL-L28HX2 KDL-L32HX2 KDL-L42HX2' HATSUBAIBI, [Online] 20 October 2003, pages 132 - 134, XP003017311 Retrieved from the Internet: <URL:http://www.cgi.sonydrive.jp/pdf_sd/Ser viceArea/impdf/TVLCD.html>
- 'TOSHIBA Toshiba Chijo BS 110 Do CS Digital Hi-Vision Ekisho Television Toriatsukai Setsumeisho Katamei 26L400V, 32L400V' TOROKU HIZUKE, [Online] 18 February 2004, pages 77 - 79, XP003017312 Retrieved from the Internet: <URL:http://www.toshiba-living.jp/rev.php?n o=31438&sid=1&1v=3&YN=Y>

## Description

### [Technical Field]

The present invention relates to a display control device, a display control method and a display control program for controlling display of video in a one-picture mode and a two-picture mode.

### [Background Art]

In recent years, a function called a two-picture display that simultaneously displays different kinds of video in a plurality of regions divided on a screen has been mounted in a television receiver. This function of the two-picture display is used when one user desires to view a plurality of programs that are simultaneously broadcasted without missing significant scenes thereof, when a plurality of users simultaneously view different programs, or other occasions. Such a function of the two-picture display will become more useful with a larger screen of the television receiver and progress of digital multi-channel broadcasting.

Patent Document 1 discloses a television receiver capable of switching a one-picture display and a plurality of two-picture displays in turn every time a "P in P / P and P" key provided in a remote controller is pressed. In this television receiver, display transitions take place in a loop among the one-picture display, a picture-in-picture (P in P) display and a picture-out-picture (P out P) display every time the "P in P/P and P" key is pressed. In the one-picture display, video of one program is displayed on a full surface (an area of a full picture) of the screen. Inthepicture-in-picture (P in P) display, a different program is displayed in a small picture area on the area of the full picture. In the picture-out-picture (P out P) display, different programs are displayed in two regions (an area of a right picture and an area of a left picture) respectively, equally divided into right and left on the screen. Note that the picture-out-picture is called "P and P" in Patent Document 1.

In the television receiver of Patent Document 1, the right picture and the left picture that have different sizes from each other cannot be displayed side-by-side in the two-picture display.

Meanwhile, Nonpatent Documents 1 and 2 describe a two-picture display method of displaying the right picture and the left picture having different sizes from each other.

Nonpatent Document 1 describes a method of switching a one-picture mode and a two-picture mode by using a two-picture button, a right button and a left button provided in the remote controller.

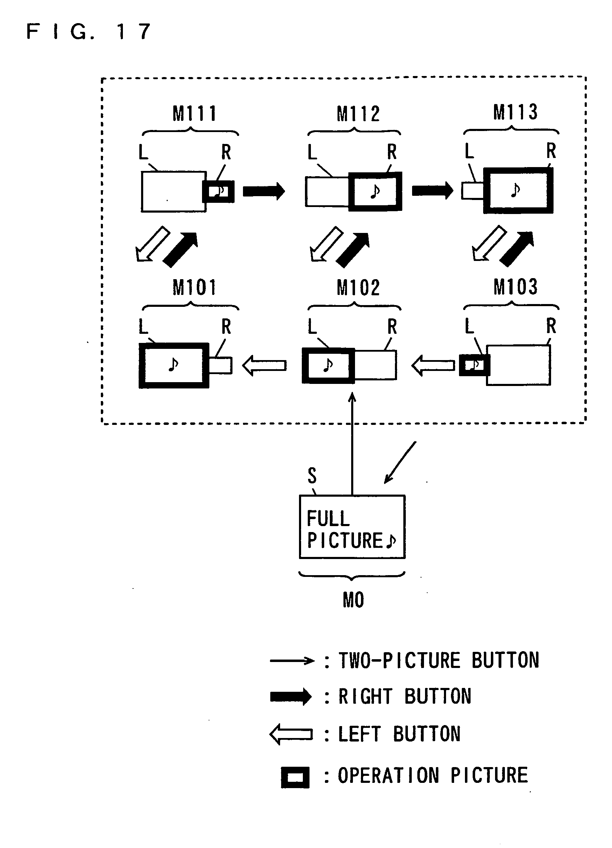

Fig. 17 is a state transition diagram of picture display and sound output in a conventional two-picture display method. The two-picture display method of Fig. 17 is described in Nonpatent Document 1.

In Fig. 17, a state of a one-picture mode M0 and states of six kinds of two-picture modes M101 to M103 and M111 to M113 are schematically shown.

A full picture S is displayed in the one-picture mode M0, and the right picture R and the left picture L are simultaneously displayed in the two-picture modes M101 to M103 and M111 to M113. In Fig. 17, video of each of the full picture S, the right picture R and the left picture L is not shown, and only frames of rectangular regions of the full picture S, the right picture R and the left picture L are shown. In Fig. 17, the frames of operation pictures are indicated by the thick lines.

Here, the operation picture means a picture on which various operationscanbecarriedout. For example, when the rightpicture R is the operation picture, a user can carry out the various operations such as setting various kinds of functions, inputting various data and inputting various instructions on the right picture R using the remote controller. When the left picture L is the operation picture, the user can carry out the above-mentioned operations on the left picture L using the remote controller.

The musical note drawn in the pictures of Fig. 17 indicates that sound corresponding to video displayed on the picture is output from a speaker.

Furthermore, transitions among the states caused by the operations of the remote controller are indicated by the arrows in Fig. 17. The thick black arrows indicate the transitions when the right button of the remote controller is pressed, and the thick white arrows indicate the transitions when the left button of the remote controller is pressed. The thin arrows indicate the transitions when the two-picture button of the remote controller is pressed.

As shown in Fig. 17, when the right button or the left button of the remote controller is pressed in the two-picture mode, a ratio of the size of the right picture or the left picture is changed, and sound output from the speaker is switched among sounds corresponding to the right picture and the left picture. In this case, the sound corresponding to the operation picture is output from the speaker.

When the right button is pressed, the operation picture moves to the right picture R. When the right button is pressed in a state where the operation picture has already been set to the right picture R, the operation picture does not move and the right picture R is increased in size while the left picture L is reduced in size. When the left button is pressed, the operation picture moves to the left picture L. When the left button is pressed in a state where the operation picture has already been set to the left picture L, the operation picture does not move and the left picture L is increased in size while the right picture R is reduced in size.

Moreover, the one-picture mode and the two-picture mode are switched by toggle every time the two-picture button is pressed.

Nonpatent Document 2 describes a method of switching the one-picture mode and the two-picture mode using the two-picture button,a right-leftreplacement button,a rightpicture operation button and a picture mode button provided in the remote controller.

The one-picture mode and the two-picture mode are switched by toggle every time the two-picture button is pressed.

Moreover, in the two-picture mode, the picture-in-picture display and the picture-out-picture display are switched in turn every time the picture mode button is pressed. In the picture-out-picture display, switching between a state where the right picture and the left picture have the same size and a state where the left picture is larger than the right picture is also carried out.

Furthermore, when the right-left replacement button is pressed in the two-picture mode, a program displayed on the area of the right picture and a program displayed on the area of the left picture are replaced with each other while the layout of the right picture and the left picture is not changed. Since sound corresponding to the left picture is output from the speaker, the program outputting sound can be replaced by pressing the right-left replacement button.

The right picture operation mode is switched by toggle to be turned on and off every time the right picture operation button is pressed. When the right picture operation mode is turned on, operations of adjusting sound volume and changing channel selection are carried out on the right picture. Meanwhile, when the right picture operation mode is turned off, the adjustment of sound volume and the change of channel selection are carried out on the left picture.

*Prior art can be found in nonpatent document "TOSHIBA Toshiba Chijo BS 110 Do CS Digital Hi-Vision Ekisho Television Toriatsukai Setsumeisho Katamei 26L400V, 32L400V (instruction manual)" disclosing a receiver implementing a dual-screen mode, wherein two videos are displayed and controlled simultaneously. There is provided a key which is operated to enter and*/*or leave the dual-screen mode, and further keys to control further options in the dual-screen mode.*
[Patent Document 1] JP 8-111828 A
[Nonpatent Document 1] Sony: Digital Television Instruction Manual (Installation/Connection Manual) KDL-L26HVX / KDL-L32HVX / KDL-L40HVX
[Nonpatent Document 2] Panasonic: Terrestrial BS 110° CS Digital High Definition Vision Plasma Television Instruction Manual (Television Manual) TH-50PX500 / TH-42PX500 / TH-37PX500

### [Disclosure of the Invention]

### [Problems to be Solved by the Invention]

In the two-picture display method of Nonpatent Document 1, however, the user needs to operate the two-picture button, the right button and the left button provided in the remote controller when switching the one-picture mode and the two-picture mode, changing the sizes of the left picture and the right picture in the two-picture mode, and switching the operation picture.

Therefore, the user must memorize relationships between the operations of the two-picture button, the right button and the left button and the switching of the one-picture mode and the two-picture mode, the changing of the sizes of the left picture and the right picture in the two-picture mode and the switching of the operation picture. Thus, it takes time for the user to master the operation method.

In addition, in the two-picture mode, the right button and the left button cannot be used for other operations.

A GUI (Graphical User Interface) that requires rightward and leftward movements is operated using the right button and the left button. For example, various setting in a hierarchical menu is carried out using the right button and the left button. In the two-picture mode, however, other operations cannot be carried out using the right button and the left button since the right button and the left button are used for changing the sizes of the right picture and the left picture and switching the operation picture.

When a data broadcast program is viewed, the transition of the picture is carried out using the right button and the left button. When the digital television broadcast is viewed, a data broadcast picture is automatically started in some cases at a certain time. In such a case, the user needs to change the mode from the two-picture mode to the one-picture mode by pressing the two-picture button every time in order to operate the data broadcast picture, which is very complicated.

As described above, various operations using the right button and the left button are restricted in the two-picture mode.

Meanwhile, in the two-picture display method of Nonpatent Document 2, the user needs to operate the two-picture button, the right-left replacement button, the right picture operation button and the picture mode button provided in the remote controller when switching the one-picture mode and the two-picture mode, changing the sizes of the right picture and the left picture in the two-picture mode, and switching the right operation mode to be turned on and off.

It is difficult for designers to add a button for operating other functions in the remote controller since a number of buttons are provided in the remote controller as described above. Meanwhile, it takes time for the user to find a desired button since he or she needs to operate a number of buttons. In addition, the complicated operations of the buttons take more time for the user to master the operation.

The picture mode button is used for changing an aspect ratio of the picture and carrying out side-cutting in the one-picture mode, and used for switching the picture-in-picture display and the picture-out-picture display in the two-picture mode. Therefore, the change of the aspect ratio and the switching of the side-cutting cannot be carried out using the picture mode button in the two-picture mode. Thus, it is difficult for the user to understand the operation method.

An object of the present invention is to provide a display control device, a display control method and a display control program that can be easily operated by users in the one-picture mode and the two-picture mode while the operation method thereof can be mastered by users in a short period of time.

Another object of the present invention is to provide a display control device, a display control method and a display control program of which operation method in the one-picture mode and the two-picture mode can be mastered by the users in a short period of time and in which other operations in the two-picture mode are not restricted.

### [Means for Solving the Problems]

(1) According to an aspect of the present invention, a display control device that controls a one-picture mode in which video is displayed in a single region on a screen and a two-picture mode in which video is displayed in each of first and second regions on the screen includes a first operation input portion that receives a first operation input caused by a user operation and a controller that controls display of the video in the one-picture mode and the two-picture mode, wherein the controller, when a picture mode is the one-picture mode, in response to the first operation input from the first operation input portion, changes the picture mode to the two-picture mode *such that said first region becomes smaller than said second region, and that said second region becomes smaller than said single region,* displays the video that has been displayed in the one-picture mode in the second region and new video in the first region and sets the first region to an operable region, when the picture mode is the two-picture mode and the second region is set to the operable region, in response to the first operation input from the first operation input portion, changes the operable region to the first region, when the picture mode is the two-picture mode and the first region is set to the operable region, in response to the first operation input from the first operation input portion, increases the first region in size and reduces the second region in size, and when the picture mode is the two-picture mode and the first region attains a maximum size in the two-picture mode, in response to the first operation input from the first operation input portion, changes the picture mode to the one-picture mode and displays the video that has been displayed in the first region in the single region.

In this display control device, when the picture mode is the one-picture mode, the picture mode is changed to the two-picture mode, the video that has been displayed in the one-picture mode is displayed in the second region and new video is displayed in the first region, and the first region is set to the operable region in response to the first operation input from the first operation input portion by a user. When the picture mode is the two-picture mode and the second region is set to the operable region, the operable region is changed to the first region in response to the first operation input from the first operation input portion by the user. In addition, when the picture mode is the two-picture mode and the first region is set to the operable region, the first region is increased in size and the second region is reduced in size in response to the first operation input from the first operation input portion by the user. When the picture mode is the two-picture mode and the first region attains the maximum size in the two-picture mode, the picture mode is changed to the one-picture mode and the video that has been displayed in the first region is displayed in the single region in response to the first operation input from the first operation input portion by the user.

As described above, the first operation input portion is added, so that change of the picture mode, change of the operable region from the second region to the first region and increase of the first region in size can be carried out by easy operations. This allows the user to easily carry out the operations in the one-picture mode and the two-picture mode by operating the first operation input portion and to master the operation method in a short period of time.

(2) The display control device may further include a second operation input portion that receives a second operation input caused by a user operation, wherein the controller, when the picture mode is the one-picture mode, in response to the second operation input from the second operation input portion, may change the picture mode to the two-picture mode *such that said second region becomes smaller than said first region, and that said first region becomes smaller than said single region,* display video that has been displayed in the one-picture mode in the first region and new video in the second region and set the second region to the operable region, when the picture mode is the two-picture mode and the first region is set to the operable region, in response to the second operation input from the second operation input portion, may change the operable region to the second region, when the picture mode is the two-picture mode and the second region is set to the operable region, in response to the second operation input from the second operation input portion, may increase the second region in size and reduce the first region in size, and when the picture mode is the two-picture mode and the second region attains a maximum size in the two-picture mode, in response to the second operation input from the second operation input portion, may change the picture mode to the one-picture mode and display the video that has been displayed in the second region in the single region.

In this case, when the picture mode is the one-picture mode, the picture mode is changed to the two-picture mode, the video that has been displayed in the one-picture mode is displayed in the first region and the new video is displayed in the second region, and the second region is set to the operable region in response to the second operation input from the second operation input portion by the user. When the picture mode is the two-picture mode and the first region is set to the operable region, the operable region is changed to the second region in response to the second operation input from the second operation input portion by the user. In addition, when the picture mode is the two-picture mode and the second region is set to the operable region, the second region is increased in size and the first region is reduced in size in response to the second operation input from the second operation input portion by the user. When the picture mode is the two-picture mode and the second region attains the maximum size in the two-picture mode, the picture mode is changed to the one-picture mode and the video that has been displayed in the second region is displayed in the single region in response to the second operation input from the second operation input portion by the user.

As described above, the second operation input portion is added, so that change of the picture mode, change of the operable region from the first region to the second region and increase of the second region in size can be carried out by easy operations.

Moreover, the operation method and the change of display by the first and second operation input portions are made symmetrical to each other. Furthermore, there is no difference between the operations by the first operation input portion and the operations by the second operation input portion, and the respective operations of the first and second operation input portions are not restricted by each other.

This allows the user to easily carry out the operations in the one-picture mode and the two-picture mode by operating the first and second operation input portions, and to master the operation method in a short period of time. In addition, the user carries out the operations without doubts, and an erroneous operation is unlikely to occur.

(3) The display control device may further include another operation input portion used by a user for a predetermined operation in the single region in the one-picture mode and for a predetermined operation in the operable region of the first and second regions in the two-picture mode, wherein the first and second operation input portions may be provided separately from the another operation input portion.

In this case, since the first and second operation input portions are provided separately from the another operation input portion, other operations by the another operation input portion are not restricted in the two-picture mode.

(4) The display control device may further control a sound output unit outputting sound and further include a sound operation input portion that receives a sound operation input caused by a user operation, wherein the controller may cause sound corresponding to video displayed in the operable region to be output from the sound output unit in response to the sound operation input from the sound operation input portion when the picture mode is the two-picture mode.

In this case, since the sound corresponding to the video displayed in the operable region is output by the operation of the sound operation input portion, an erroneous operation does not occur.

In addition, since a switching operation of the sound output can be carried out by the sound operation input portion that is independent from the first and second operation input portions, the sound output is prevented from being switched without intention by the operations of display of the video. This prevents, when one user operates display of the video, the sound corresponding to the video that is viewed by another user from not being output without intention.

(5) The display control device may further control a sound output unit that outputs sound, wherein the controller may cause sound corresponding to video displayed in the operable region to be output from the sound output unit when the picture mode is the two-picture mode.

In this case, the sound corresponding to the video displayed in the operable region is automatically output without operation relating to the sound by the user. This reduces a burden on the user.

Moreover, the user pays attention to the video in the operable region. Thus, the sound corresponding to the video to which the user pays attention is output, so that the user can naturally view video in the two-picture mode without any uncomfortable feeling.

(6) The display control device may further control a sound output unit that outputs sound, wherein the controller may cause sound corresponding to video displayed in the operable region to be output from the sound output unit in response to the first or second operation input from the first or second operation input portion when the picture mode is the two-picture mode and sound corresponding to video displayed in a region that is not operable is output from the sound output unit, and increase the first region in size and reduce the second region in size in response to the first operation input from the first operation input portion, and increase the second region in size and reduce the first region in size in response to the second operation input from the second operation input portion when the picture mode is the two-picture mode and the sound corresponding to the video displayed in the operable region is output from the sound output unit.

In this case, the sound corresponding to the video displayed in the operable region is output from the sound output unit in response to the first or second operation input from the first or second operation input portion by the user when the picture mode is the two-picture mode and the sound corresponding to the video displayed in the region that is not operable is output from the sound output unit. In addition, when the picture mode is the two-picture mode and the sound corresponding to the video displayed in the operable region is output from the sound output unit, the first region is increased in size and the second region is reduced in size in response to the first operation input from the first operation input portion by the user, and the second region is increased in size and the first region is reduced in size in response to the second operation input from the second operation input portion.

As described above, the user can carry out change of the operable region independently from switching of the sound output. In addition, the user operates the first or second operation input portion twice, so that the sound corresponding to the operable region can be output. Normally, the user pays attention to the video of the operable region. Thus, the sound corresponding to the video to which the user pays attention is output, so that the user can naturally view video in the two-picture mode without any uncomfortable feeling.

(7) The display control device may further control a sound output unit that outputs sound, wherein the controller may cause sound corresponding to video displayed in the one-picture mode to be output from the sound output unit when the picture mode is changed from the two-picture mode to the one-picture mode. In this case, the video displayed in the one-picture mode reliably corresponds to the sound.

(8) According to still another aspect of the present invention, a display control method for controlling a one-picture mode in which video is displayed in a single region on a screen and a two-picture mode in which video is displayed in each of first and second regions on the screen includes the steps of, when a picture mode is the one-picture mode, in response to a first operation input from a first operation input portion, changing the picture mode to the two-picture mode *such that said first region becomes smaller than said second region, and that said second region becomes smaller than said single region,* displaying video that has been displayed in the one-picture mode in the second region and new video in the first region and setting the first region to an operable region, when the picture mode is the two-picture mode and the second region is set to the operable region, in response to the first operation input from the first operation input portion, changing the operable region to the first region, when the picture mode is the two-picture mode and the first region is set to the operable region, in response to the first operation input from the first operation input portion, increasing the first region in size and reducing the second region in size, and when the picture mode is the two-picture mode and the first region attains a maximum size in the two-picture mode, in response to the first operation input from the first operation input portion, changing the picture mode to the one-picture mode and displaying video that has been displayed in the first region in the single region.

(9) The display control method may further include the steps of, when the picture mode is the one-picture mode, in response to a second operation input from a second operation input portion, changing the picture mode to the two-picture mode *such that said second region becomes smaller than said first region, and that said first region becomes smaller than said single region,* displaying video that has been displayed in the one-picture mode in the first region and new video in the second region and setting the second region to the operable region, when the picture mode is the two-picture mode and the first region is set to the operable region, in response to the second operation input from the second operation input portion, changing the operable region to the second region, when the picture mode is the two-picture mode and the second region is set to the operable region, in response to the second operation input from the second operation input portion, increasing the second region in size and reducing the first region in size, and when the picture mode is the two-picture mode and the second region attains a maximum size in the two-picture mode, in response to the second operation input from the second operation input portion, changing the picture mode to the one-picture mode and displaying video that has been displayed in the second region in the single region. (10) According to still another aspect of the present invention, a display control program that is executable by a computer and controls a one-picture mode in which video is displayed in a single region on a screen and a two-picture mode in which video is displayed in each of first and second regions on the screen causes the computer to execute the processes of, when a picture mode is the one-picture mode, in response to a first operation input from a first operation input portion, changing the picture mode to the two-picture mode *such that said first region becomes smaller than said second region, and that said second region becomes smaller than said single region,* displaying video that has been displayed in the one-picture mode in the second region and new video in the first region and setting the first region to an operable region, when the picture mode is the two-picture mode and the second region is set to the operable region, in response to the first operation input from the first operation input portion, changing the operable region to the first region, when the picture mode is the two-picture mode and the first region is set to the operable region, in response to the first operation input from the first operation input portion, increasing the first region in size and reducing the second region in size, and when the picture mode is the two-picture mode and the first region attains a maximum size in the two-picture mode, in response to the first operation input from the first operation input portion, changing the picture mode to the one-picture mode and displaying video that has been displayed in the first region in the single region.

### [Effects of the Invention]

According to the present invention, a user can easily carry out operations in a one-picture mode and a two-picture mode and master an operation method in a short period of time.

In addition, the user can master the operation method in the one-picture mode and the two-picture mode in a short period of time and other operations in the two-picture mode are not restricted.

### [Brief Description of the Drawings]

[FIG. 1] FIG. 1 is a block diagram showing a configuration of a video display device according to a first embodiment of the present invention.
[FIG. 2] FIG. 2 is a schematic view showing an example of a remote controller included in an input unit of Fig. 1.
[FIG. 3] FIG. 3 is a schematic view showing another example of a right picture plus button and a left picture plus button provided in the remote controller included in the input unit of Fig. 1.
[FIG. 4] FIG. 4 is a state transition diagram of picture display and sound output in the first embodiment of the present invention.
[FIG. 5] FIG. 5 is a flowchart showing display control processing of a picture transition controller in the first embodiment of the present invention.
[FIG. 6] FIG. 6 is a diagram showing an example of a sound volume display on a picture.
[FIG. 7] FIG. 7 is a state transition diagram of picture display and sound output in a second embodiment of the present invention.
[FIG. 8] FIG. 8 is a flowchart showing display control processing of a picture transition controller in the second embodiment of the present invention.
[FIG. 9] FIG. 9 is a state transition diagram of picture display and sound output in a third embodiment of the present invention.
[FIG. 10] FIG. 10 is a flowchart showing display control processing of a picture transition controller in the third embodiment of the present invention.
[FIG. 11] FIG. 11 is a state transition diagram of picture display and sound output in a fourth embodiment of the present invention.
[FIG. 12] FIG. 12 is a flowchart showing display control processing of a picture transition controller in the fourth embodiment of the present invention.
[FIG. 13] FIG. 13 is a schematic view showing an example of a remote controller included in an input unit of a video display device according to a first example.
[FIG. 14] FIG. 14 is a state transition diagram of picture display and sound output in the first example.
[FIG. 15] FIG. 15 is a flowchart showing display control processing of a picture transition controller in the first example.
[FIG. 16] FIG. 16 is a flowchart showing processes in a two-picture mode of the display control processing in the first example.
[FIG. 17] FIG. 17 is a state transition diagram of picture display and sound output in a conventional two-picture display method.

### [Best Mode for Carrying out the Invention]

Hereinafter, embodiments of the present invention will be described while referring to the drawings. In the plurality of drawings, the same signs are given to the same structural elements or the same processes so that redundant description is omitted. When a plurality of structural elements of the same kind appear in the same diagram, one alphabetic character is given at the end of each sign to identify the structural elements.

### (1) First Embodiment

### (1-1) Configuration of Video Display Device

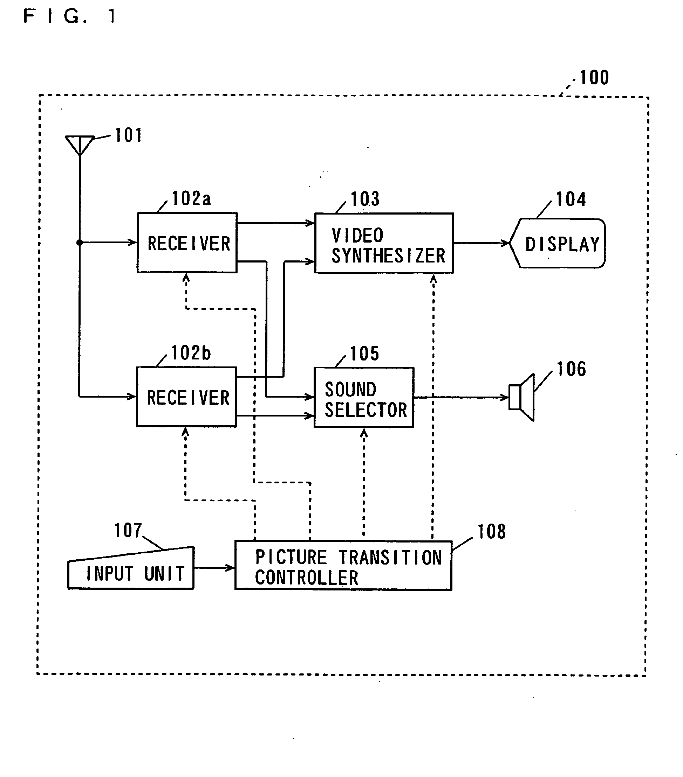

Fig. 1 is a block diagram showing a configuration of a video display device according to a first embodiment of the present invention.

In Fig. 1, the video display device 100 includes a receiving antenna 101, receivers 102a, 102b, a video synthesizer 103, a display 104, a sound selector 105, a speaker 106, an input unit 107 and a picture transition controller 108. The video synthesizer 103, the sound selector 105, the input unit 107 and the picture transition controller 108 constitute a display control device.

The video display device 100 according to the present embodiment has a one-picture mode and a two-picture mode. In the one-picture mode, video is displayed in a single rectangular region over the whole of a screen of the display 104. In the two-picture mode, video is displayed in each of two rectangular regions arranged at the right and the left on the screen of the display 104.

The receiving antenna 101 receives airwaves including a video signal and a sound signal and converts the received airwaves into electrical signals to output them. The receiving antenna 101 is a television antenna installed at a roof of every home, for example. Alternatively, when a program is wirelessly transmitted through a wireless LAN (Local Area Network), the receiving antenna 101 is an antenna for the wireless LAN.

Note that a cable connected to a broadband router is used instead of the receiving antenna 101 when a program is transmitted through broadband communication. When a program is distributed using a media package such as a DVD (Digital Versatile Disk), the video display device 100 may not include the receiving antenna 101.

The receiver 102a decodes the video signal and the sound signal included in the electrical signal output from the receiving antenna 101, and supplies the video signal and the sound signal to the video synthesizer 103 and the sound selector 105.

When the electrical signal is a broadcast signal of a digital broadcast, the receiver 102a is composed of a tuner module for a digital broadcast television and an MPEG (Moving Picture Experts Group) video/sound decoder. The tuner module tunes in to and demodulates the broadcast signal. The MPEG video/sound decoder decodes the demodulated broadcast signal to extract the video signal and the sound signal.

When the electrical signal is a communication packet transmitted through the broadband communication, the receiver 102a is constituted by a communication protocol stack and the video/sound decoder.

Note that when a video bit stream and a sound bit stream compressed according to an MPEG system and the like are output from the receiver 102a, a video decoder for decoding the compressed video bit stream may be provided in a subsequent stage of the video synthesizer 103, and a sound decoder for decoding the sound bit stream may be provided in a subsequent stage of the sound selector 105.

The receiver 102b has the same configuration as the receiver 102a. Alternatively, the receiver 102a and the receiver 102b may have the differentconfigurations. For example, the receiver 102a may have a configuration that receives the broadcast signal of the digital broadcast, and the receiver 102b may have the configuration that receives communication packets transmitted through the broadband communication.

The video synthesizer 103 synthesizes the video signal output from the receiver 102a and the video signal output from the receiver 102b into one video signal and outputs the synthesized video signal to the display 104 according to an instruction of the picture transition controller 108, described later.

In addition, the video synthesizer 103 may have a function of OSD (On Screen Display) that realizes a GUI (Graphical User Interface) by carrying out graphics drawing concurrently with synthesis of the video signals.

At the time of the synthesis of the video signals, the video synthesizer 103 changes (scales) the size of each video based on the video signals output from the receivers 102a, 102b and maps each video at a predetermined coordinate position of video that is to be synthesized.

The sound selector 105 selects either one of the sound signals output from the receivers 102a, 102b, and outputs the selected sound signal to the speaker 106 according to an instruction of the picture transition controller 108 described later.

The display 104 converts the video signal output from the video synthesizer 103 into light, which is a physical phenomenon, to display video on the screen. The display 104 is composed of a plasma display panel, a liquid crystal display panel, a CRT (Cathode Ray Tube) or the like used for the television receiver.

The speaker 106 converts the sound signal output from the sound selector 105 into sound waves, which are a physical phenomenon, to output them as sound.

The picture transition controller 108 controls and manages the overall video display device 100. In the present embodiment, the picture transition controller 108 is a computer composed of a CPU (Central Processing Unit) and a recording medium. The recording medium is a semiconductor memory, a memory card or the like, for example.

A display control program, described later, is recorded in the recording medium. The CPU controls the receivers 102a, 102b, the video synthesizer 103 and the sound selector 105 according to the display control program recorded in the recording medium.

In particular, the picture transition controller 108 supplies an instruction to the video synthesizer 103 in order to control the picture mode. The picture layouts in the one-picture mode and the two-picture mode are designated by the size and the coordinate position of the video displayed on the screen. In this case, the picture transition controller 108 may give an instruction on the size and the coordinate position of the video in the one-picture mode and the two-picture mode directly to the video synthesizer 103 using a parameter. Alternatively, the picture transition controller 108 may give names such as "a one-picture mode", "a two-picture mode (a)", "a two-picture mode (b)" and "a two-picture mode (c)", for example, to the picture layouts of the respective picture modes, and give an instruction on the picture layout to the video synthesizer 103 using these names.

In addition, the picture transition controller 108 controls selection of the receivers 102a, 102b. Specifically, the picture transition controller 108 can select from among displaying video based on the video signal output from one of the receivers 102a, 102b, displaying video based on the video signals output from both the receivers 102a, 102b, and not displaying video based on the video signals output from both the receivers 102a, 102b.

Furthermore, the picture transition controller 108 instructs the sound selector 105 to switch the sound output.

The input unit 107 accepts an operation to the GUI displayed on the screen of the display 104 as operating information (operation input).

In the present embodiment, the input unit 107 is constituted by a remote controller and a light receiver. The remote controller transmits the operating information to the light receiver as an infrared signal. The light receiver is provided in a main body of the video display device 100. This light receiver receives the infrared signal from the remote controller, and supplies the operating information to the picture transition controller 108. Note that the main body of the video display device 100 includes the receivers 102a, 102b, the video synthesizer 103, the display 104, the sound selector 105 and the speaker 106.

The input unit 107 may be constituted by a hardware button provided in a main body of the video synthesizer 103 or a touch panel attached to the screen of the display 104.

The input unit 107 may be constituted by a microphone and a voice recognition device. In this case, voice of the user is acquired by the microphone as operating information, and the operating information is recognized by the sound recognition device based on a sound signal output from the microphone.

Furthermore, the input unit 107 may be constituted by a camera and a video processing device. Inthiscase, body movements (gesture movements) of the user are imaged by the camera as operating information, and a video signal output from the camera is processed in the video processing device, so that the operating information is recognized.

### (1-2) Example of the Remote Controller

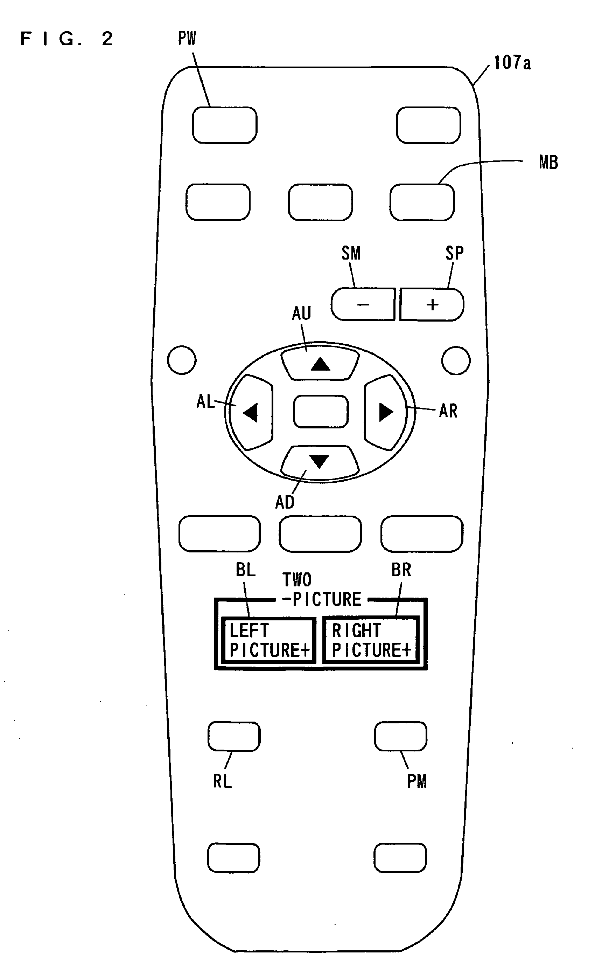

Fig. 2 is a schematic view showing an example of the remote controller included in the input unit 107 of Fig. 1.

As shown in Fig. 2, a power supply button PW, a mute button MB, a sound volume plus button SP, a sound volume minus button SM, a right button AR, a left button AL, an up button AU, a down button AD, a right picture plus button BR, a left picture plus button BL, a right-left replacement button RL, a picture mode button PM and so on are provided in a remote controller 107a.

The sound volume plus button SP is operated by the user in order to increase the volume of the sound output from the speaker 106. The sound volume minus button SM is operated by the user in order to decrease the volume of the sound output from the speaker 106.

The right picture plus button BR and the left picture plus button BL are operated by the user in order to switch the display in the one-picture mode and the two-picture mode. The right picture plus button BR is arranged on the right side, and the left picture plus button BL is arranged on the left side. In this example, the right picture plus button BR shows "right picture +" such that it is understood that the right picture R is increased in size, and the left picture plus button BL shows "left picture +" such that it is understood that the left picture L is increased in size.

In the following description, the right picture plus button BR and the left picture plus button BL are collectively called picture operation buttons as required.

### (1-3) Other Examples of the Picture Operation Buttons

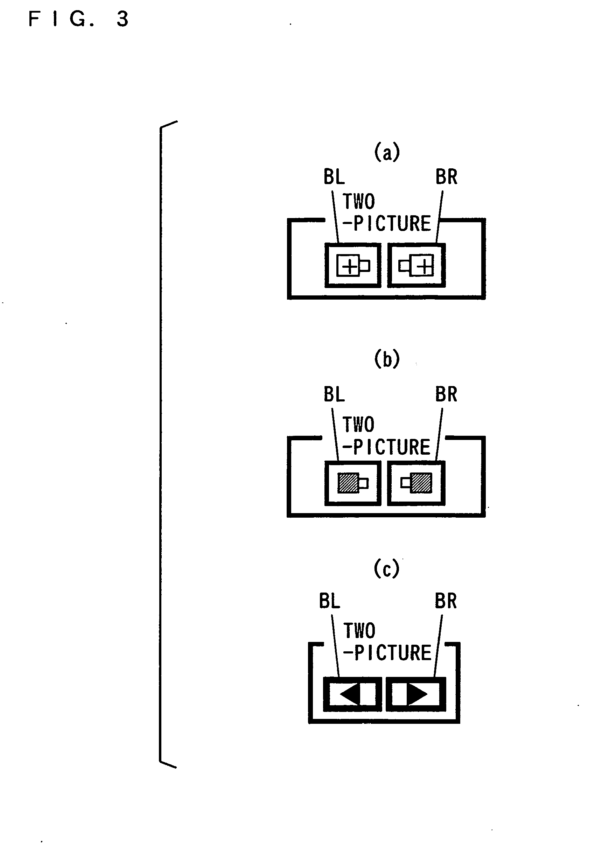

Fig. 3 is a schematic view showing other examples of the right picture plus button BR and the left picture plus button BL provided in the remote controller 107a included in the input unit 107 of Fig. 1.

In Fig. 3, only the right picture plus button BR and the left picture plus button BL of the remote controller 107a are shown.

In the example of Fig. 3 (a), a large rectangle on the right side and a small rectangle on the left side are displayed in the right picture plus button BR, and a large rectangle on the left side and a small rectangle on the right side are displayed in the left picture plus button BL. Each of the large rectangles displays "+".

In the example of Fig. 3 (b), a large rectangle on the right side and a small rectangle on the left side are displayed in the right picture plus button BR, and a large rectangle on the left side and a small rectangle on the right side are displayed in the left picture plus button BL. Each of the large rectangles is differently colored.

In the example of Fig. 3 (c), a triangle directed rightward is displayed in the right picture plus button BR, and a triangle directed leftward is displayed in the left picture plus button BL.

Note that shapes and designs of the right picture plus button BR and the left picture plus button BL are not limited to the above-described examples.

### (1-4) Description of the Picture Modes

In the one-picture mode, video is displayed in a single rectangular region over the whole of the screen of the display 104 based on the video signal output from one of the receivers 102a, 102b. In the two-picture mode, video is displayed in a rectangular region arranged at the right on the screen of the display 104 based on the video signal output from one of the receivers 102a, 102b, and video is displayed in a rectangular region arranged at the left on the screen of the display 104 based on the video signal output from the other of the receivers 102a, 102b.

In the one-picture mode, the video displayed in the single rectangular region over the whole of the screen is called a full picture. In the two-picture mode, of the two rectangular regions adjacent from side to side on the screen, the video displayed in the rectangular region on the right side is called a right picture, and the video displayed in the rectangular region on the left side is called a left picture. Moreover, thefullpicture, the right picture and the left picture are collectively called pictures. The right picture plus button BR and the left picture plus button BL are collectively called picture operation buttons.

Moreover, the sound associated with the video of the left picture L is called sound corresponding to the left picture L, and the sound associated with the video of the right picture R is called sound corresponding to the right picture R.

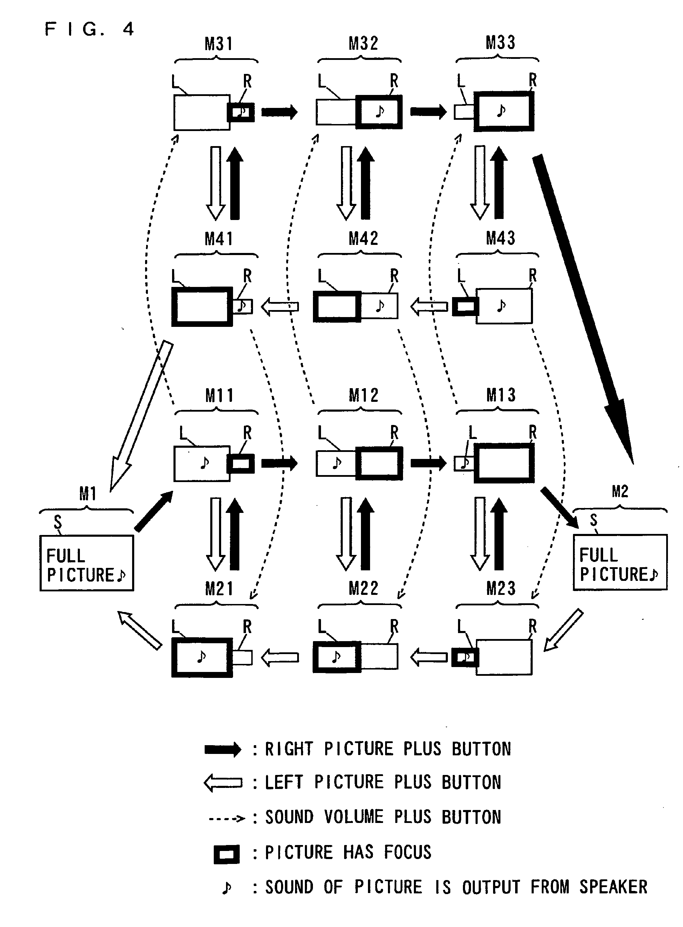

Fig. 4 is a state transition diagram of picture display and sound output in the first embodiment of the present invention.

Fig. 4 schematically represents states of two kinds of the one-picture modes M1, M2 and states of twelve kinds of the two-picture modes M11 to M13, M21 to M23, M31 to M33, M41 to M43.

The full picture S is displayed in the one-picture modes M1, M2, and the right picture R and the left picture L are simultaneously displayed in the two-picture modes M11 to M13, M21 to M23, M31 to M33, M41 to M43. In Fig. 4, video in each of the full picture S, the right picture R and the left picture L is not shown, and only the frames of the rectangular regions in the full picture S, the right picture R and the left picture L are shown. Moreover, the frame of the right picture R or the left picture L having focus is represented by the bold line in Fig. 4.

Here, the focus represents a state in which various operations can be carried out on the picture. For example, when the focus is in the right picture R, the user can carry out the various operations such as setting various functions, inputting various data and inputting various instructions on the right picture R using the input unit 107. When the focus is in the left picture L, the user can carry out the foregoing operations on the left picture L using the input unit 107.

The frame of the picture having the focus may be indicated with a line forming a rectangle, or icons, words or the like may be displayed on the picture having the focus such that the user can recognize whichpicture has the focus. Amethod for specifying the picture having the focus is not limited to these methods.

Musical notes drawn in the pictures of Fig. 4 represent that the sounds corresponding to the pictures are output from the speaker 106. In practice, icons and the like such as a musical note mark, a sound wave mark, a graphic indicating a speaker may be displayed on or near the pictures on the screen of the display 104.

Furthermore, Fig. 4 shows transitions among the states caused by the operation of the input unit 107 using the arrows. The thick black arrows represent the transitions when the right picture plus button BR of the input unit 107 is pressed, and the thick white arrows represent the transitions when the left picture plus button BL of the input unit 107 is pressed. Moreover, the dotted arrows represent the transition when the sound volume plus button SP of the input unit 107 is pressed.

In the one-picture mode M1, the video is displayed on the full picture S. When the right picture plus button BR is pressed in the one-picture mode M1, the picture mode shifts to the two-picture mode M11. In this case, the left picture L whose size is reduced from the full picture S is arranged at the left on the screen, and the video of the full picture S is reduced in size to be displayed on the left picture L. In addition, the small right picture R including new video is arranged in an empty space at the right on the screen. This causes a plurality of kinds of video to be simultaneously displayed on the screen.

When the right picture plus button BR is pressed in the two-picture mode M11, the picture mode shifts to the picture mode M12. When the right picture plus button BR is pressed in the two-picture mode M12, the picture mode shifts to the picture mode M13. In this manner, the picture mode changes among the two-picture modes M11, M12, M13 in this order every time the right picture plus button BR is pressed. In this case, the left picture L is gradually reduced in size, and the right picture R is gradually increased in size. In the two-picture mode M13, the right picture R has its maximum size and the left picture L has its minimum size.

When the right picture plus button BR is pressed in the two-picture mode M13, the picture mode shifts to the one-picture mode M2. In the one-picture mode M2, the video of the right picture R in the two-picture mode M13 is increased in size to be displayed on the full picture S.

Conversely, when the left picture plus button BL is pressed in the one-picture mode M2, the picture mode shifts to the two-picture mode M23. In this case, the right picture R which is reduced in size from the full picture S is arranged at the right on the screen, and the video of the full picture S is reduced in size to be displayed on the right picture R. In addition, the small left picture L including new video is arranged in an empty space at the left on the screen. This causes a plurality of kinds of video to be simultaneously displayed on the screen.

When the left picture plus button BL is pressed in the two-picture mode 23, the picture mode shifts to the picture mode M22. When the left picture plus button BL is pressed in the two-picture mode M22, the picture mode shifts to the picture mode M21. In this manner, the picture mode changes among the two-picture modes M23, M22, M21 in this order every time the left picture plus button BL is pressed. In this case, the left picture L is gradually increased in size and the right picture R is gradually reduced in size. In the two-picture mode M21, the left picture L has the maximum size and the right picture R has the minimum size.

When the left picture plus button BL is pressed in the two-picture mode M21, the picture mode shifts to the one-picture mode M1. In the one-picture mode M1, the video of the left picture L in the two-picture mode M21 is increased in size to be displayed on the full picture S.

The focus exists in the right picture R in the two-picture modes M11 to M13 immediately after the right picture plus button BR is pressed. The user presses the right picture plus button BR when the focus exists in the right picture R, thereby allowing the right picture R to be gradually increased in size and the left picture L to be gradually reduced in size.

Conversely, the focus exists in the left picture L in the picture modes M23 to M21 immediately after the left picture plus button BL is pressed. The user presses the left picture plus button BL when the focus exists in the left picture L, thereby allowing the left picture L to be gradually increased in size and the right picture R to be gradually reduced in size.

When the left picture plus button BL is pressed in the two-picture modes M11 to M13 in which the right picture R has the focus, the picture modes shift to the two-picture modes M21 to M23, respectively. Thus, the focus moves to the left picture L.

Conversely, when the right picture plus button BR is pressed in the two-picture modes M21 to M23 in which the left picture L has the focus, the picture modes shift to the two-picture modes M11 to M13, respectively. Thus, the focus moves to the right picture R.

In the two-picture modes M11 to M13, the sound corresponding to the left picture L is output from the speaker 106. When the sound volume plus button SP is pressed in the two-picture modes M11 to M13, the picture modes shift to the two-picture modes M31 to M33, respectively. In the two-picture modes M31 to M33, the sound corresponding to the right picture R is output from the speaker 106.

When the sound selector 105 is set in a mute state by the mute button MB, the sound corresponding to the right picture R is output at zero sound volume. That is, although the sound signal corresponding to the right picture R is selected, the sound is not output from the speaker 106.

In the two-picture modes M31 to M33, the focus exists in the right picture R. The picture mode changes among the two-picture modes M31, M32, M33 in this order every time the right picture plus button BR is pressed. In this case, the right picture R is gradually increased in size while the left picture L is gradually reduced in size. In the two-picture mode M33, the right picture R has the maximum size and the left picture L has the minimum size. When the right picture plus button BR is pressed in the two-picture mode M33, the picture mode shifts to the one-picture mode M2.

When the left picture plus button BL is pressed in the two-picture modes M31 to M33 in which the right picture R has the focus, the picture modes shift to the two-picture modes M41 to M43, respectively.

In the two-picture modes M41 to M43, the focus exists in the left picture L. The picture mode changes among the two-picture modes M43, M42, M41 in this order every time the left picture plus button BL is pressed. In this case, the left picture L is gradually increased in size and the right picture R is gradually reduced in size. In the two-picture mode M41, the left picture L has the maximum size and the right picture R has the minimum size. When the left picture plus button BL is pressed in the two-picture mode M41, the picture mode shifts to the one-picture mode M1.

In the two-picture modes M41 to M43, the sound corresponding to the right picture R is output from the speaker 106. When the sound volume plus button SP is pressed in the two-picture modes M41 to M43, the picture modes shift to the two-picture modes M21 to M23, respectively. In the two-picture modes M21 to M23, the sound corresponding to the left picture L is output from the speaker 106.

When the sound selector 105 is set in the mute state by the mute button MB, the sound corresponding to the left picture L is output at zero sound volume. That is, although the sound signal corresponding to the left picture L is selected, the sound is not output from the speaker 106.

As described above, in the present embodiment, the focus is set in the right picture R in all the two-picture modes M11 to M13, M31 to M33 immediately after the right picture plus button BR is pressed. The user presses the right picture plus button BR when the focus exists in the right picture R, thereby allowing the right picture R to be gradually increased in size and the left picture L to be gradually reduced in size.

Conversely, the focus is set in the left picture L in all the two-picture modes M21 to M23, M41 to M43 immediately after the left picture plus button BL is pressed. The user presses the left picture plus button BL when the focus exists in the left picture L, thereby allowing the left picture L to be gradually increased in size and the right picture R to be gradually reduced in size.

When the position of the picture (the left picture L or the right picture R) in which the focus is set does not correspond to the position of the pressed picture operation button (the right picture plus button BR or the left picture plus button BL), the sizes of the right picture R and the left picture L do not change and the focus moves to the picture corresponding to the pressed picture operation button.

Furthermore, pressing the sound volume plus button SP when the focus exists in the right picture R causes the sound corresponding to the right picture R to be output from the speaker 106. Conversely, pressing the sound volume plus button SP when the focus exists in the left picture L causes the sound corresponding to the left picture L to be output from the speaker 106.

As described above, the operation of changing the sizes of the right picture R and the left picture L and the operation of switching the sound output are completely independent from each other.

### (1-5) Display Control Processing

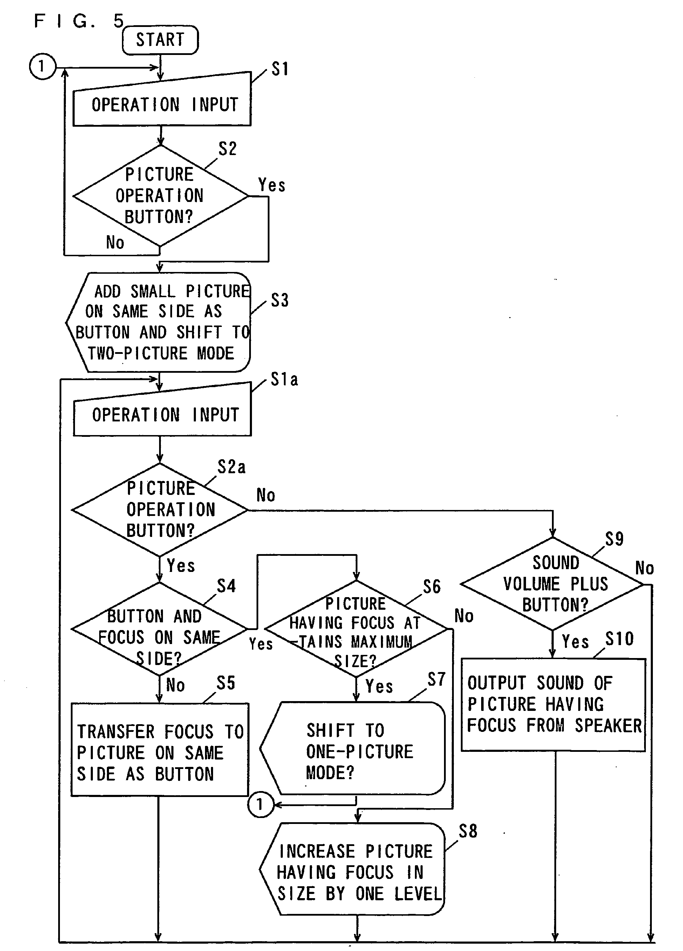

Fig. 5 is a flowchart showing display control processing of the picture transition controller 108 in the first embodiment of the present invention.

The CPU of the picture transition controller 108 controls the receivers 102a, 102b, the video synthesizer 103 and the sound selector 105 according to the display control program recorded in the recording medium, so that the display control processing of Fig. 5 is executed.

Note that description of processes that are not directly related to the present invention is eliminated in the flowchart of Fig. 5. In practice, processes based on the operation of the input unit 107 such as turning on and off of the power supply, selection of a channel and display of a channel program, for example, are carried out during return from Step S2 to Step S1.

Steps S1, S2 are processes in the one-picture mode, Steps S1a, S2a, S4, S5, S6, S8 . S9, S10 are processes in the two-picture mode, and Steps S3, S7 are processes in a transitional state between the one-picture mode and the two-picture mode.

In the following description, when the right picture R and the leftpicture L in the two-picture mode are not distinguished, each of the right picture R and the left picture L is referred to as the picture. In addition, when the right picture plus button BR and the left picture plus button BL are not distinguished, each of the right picture plus button BR and the left picture plus button BL is referred to as the picture operation button.

In an initial state, the picture mode is set to the one-picture mode. When the user operates the input unit 107, the picture transition controller 108 receives the operating information (operation input) representing the content of a user operation from the input unit 107 (Step S1).

The picture transition controller 108 determines based on the operating information whether or not the picture operation button is operated by the user (Step S2).

When the picture operation button is operated by the user, the picture transition controller 108 adds a small picture on the screen such that the small picture is positioned on the same side as the picture operation button, and shifts the picture mode to the two-picture mode (Step S3).

Specifically, when the user presses the right picture plus button BR, the video synthesizer 103 reduces the video that has been displayed on the full picture S in size to display the video at the left on the screen as the left picture L while adding the small right picture R including new video in a space to the right of the left picture L based on the instruction of the picture transition controller 108. Simultaneously, the video synthesizer 103 sets the focus in the right picture R.

When the user presses the left picture plus button BL, the video synthesizer 103 reduces the video that has been displayed on the full picture S in size to display the video at the right on the screen as the right picture R while adding the small left picture L including new video in a space to the left of the right picture R based on the instruction of the picture transition controller 108. Simultaneously, the video synthesizer 103 sets the focus in the left picture L.

When the picture operation button is not operated by the user in Step S2, the picture transition controller 108 carries out other processes and then returns to the process of Step S1.

Next, when the user operates the input unit 107, the picture transition controller 108 receives the operating information (operation input) representing the content of a user operation from the input unit 107 (Step S1a).

The picture transition controller 108 determines based on the operating information whether or not the picture operation button is operated by the user (Step S2a).

When the picture operation button is operated by the user, the picture transition controller 108 determines whether or not the operated picture operation button and the picture having the focus are on the same side (Step S4).

When the operated picture operation button and the picture having the focus are on the opposite sides to each other, the picture transition controller 108 moves the focus to the picture on the same side as the operated picture operation button (Step S5).

Specifically, when the focus exists in the left picture L and the user presses the right picture plus button BR, the video synthesizer 103 moves the focus to the right picture R based on the instruction of the picture transition controller 108. When the focus exists in the right picture R and the user presses the left picture plus button BL, the video synthesizer 103 moves the focus to the left picture L based on the instruction of the picture transition controller 108. This causes the side of the pressed picture operation button and the side of the picture having the focus to coincide with each other. Thereafter, the picture transition controller 108 returns to the process of Step S1a.

When the operated picture operation button and the picture having the focus are on the same side in Step S4, the picture transition controller 108 determines whether or not the picture having the focus has the maximum size (Step S6).

When the picture having the focus has the maximum size, the picture transition controller 108 shifts the picture mode to the one-picture mode (Step S7).

Specifically, when the focus exists in the right picture R having the maximum size, the picture mode shifts to the one-picture mode in which the video synthesizer 103 causes the video of the right picture R to be displayed on the full picture S based on the instruction of the picture transition controller 108.

When the focus exists in the left picture L having the maximum size, the picture mode shifts to the one-picture mode in which the video synthesizer 103 causes the video of the left picture L to be displayed on the full picture S based on the instruction of the picture transition controller 108. Thereafter, the picture transition controller 108 returns to the process of Step S1.

When the picture having the focus is smaller than the maximum size in Step S6, the picture transition controller 108 increases the picture having the focus in size by one level (Step S8). Simultaneously, the picture transition controller 108 reduces the picture not having the focus in size by one level.

Specifically, when the focus exists in the right picture

R, the video synthesizer 103 increases the right picture R in size by one level and reduces the left picture L in size by one level based on the instruction of the picture transition controller 108. In addition, when the focus exists in the left picture L, the video synthesizer 103 increases the left picture L in size by one level and reduces the right picture R in size by one level based on the instruction of the picture transition controller 108. Thereafter, the picture transition controller 108 returns to the process of Step S1a.

When the picture operation button is not operated by the user in Step S2a, the picture transition controller 108 determines whether or not the sound volume plus button SP is operated by the user (Step S9).

When the sound volume plus button SP is operated by the user, the picture transition controller 108 causes the sound corresponding to the picture having the focus to be output from the speaker 106 (Step S10).

Specifically, when the focus exists in the right picture R, the sound selector 105 causes the sound corresponding to the right picture R to be output from the speaker 106 based on the instruction of the picture transition controller 108. When the focus exists in the left picture L, the sound selector 105 causes the sound corresponding to the left picture L to be output from the speaker 106 based on the instruction of the picture transition controller 108. Thereafter, the picture transition controller 108 returns to the process of Step S1a.

When the sound volume plus button SP is not operated by the user in Step S9, the picture transition controller 108 returns to the process of Step S1a.

Note that in Step S10, a display indicating to which picture the sound output from the speaker 106 corresponds may be made on the screen using a method described later simultaneously with switching of the sound output from the speaker 106.

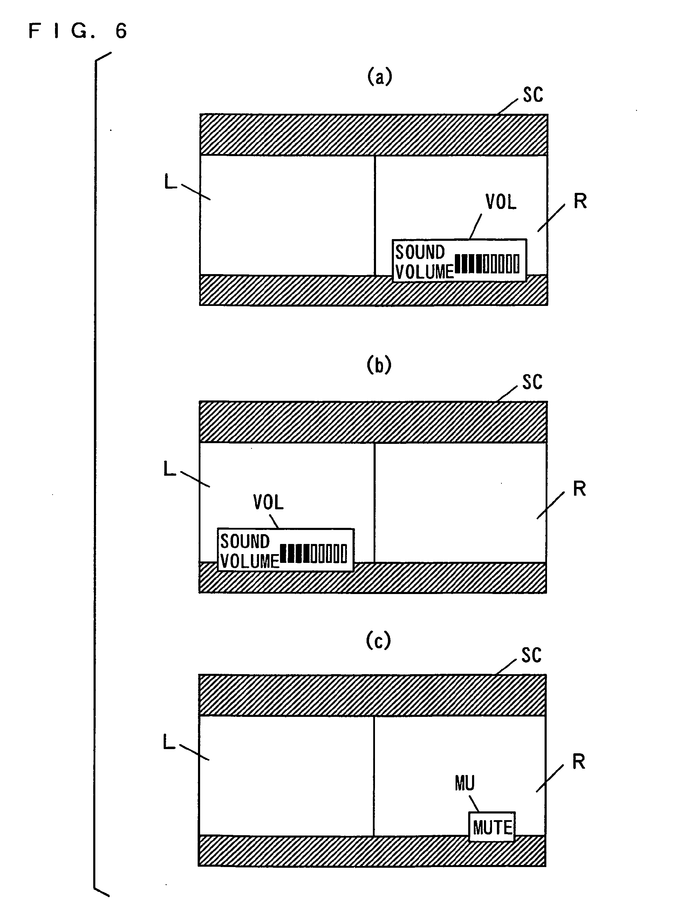

Fig. 6 is a diagram showing an example of a sound volume display on the picture. As shown in Fig. 6, the left picture L is displayed on the left side of the screen SC and the right picture R is displayed on the right side in the two-picture mode.

When the sound corresponding to the right picture R is output from the speaker 106, a bar graph VOL indicating the current sound volume is displayed on the right picture R as shown in Fig. 6 (a). When the sound corresponding to the left picture L is output from the speaker 106, the bar graph VOL indicating the current sound volume is displayed on the left picture L as shown in Fig. 6 (b).

Accordingly, the user can visually recognize by the bar graph VOL which of the sounds of the right picture R and the left picture L is output.

In addition, the sound enters the mute state as the user presses the mute button MB of the remote controller 107a in Fig. 2. In this case, a mute mark MT representing the mute state is displayed on the right picture R or the left picture L of the screen. The sound is not output from the speaker 106 in the mute state, and the mute mark MU is displayed on the right picture R or the left picture L in order to indicate which of the sound signal corresponding to the right picture R and the sound signal corresponding to the left picture L is selected.

When the sound corresponding to the right picture R is selected, the mute mark MU is displayed on the right picture R as shown in Fig. 6 (c). In this case, when the mute state is reset by the mute button MB, the sound corresponding to the right picture R is output from the speaker 106. When the sound corresponding to the left picture L is selected, the mute mark MU is displayed on the left picture L. In this case, when the mute state is reset by the mute button MB, the sound corresponding to the left picture L is output from the speaker 106.

Accordingly, the user can visually recognize by the mute mark MU which of the sounds of the right picture R and the left picture L is in the mute state.

### (1-6) Effects of the First Embodiment

As described above, switching of the one-picture mode and the two-picture mode, change of the sizes of the right picture R and the left picture L and transfer of the focus can be carried out using the right picture plus button BR and the left picture plus button BL in the present embodiment. This causes the operation method to be easy and the operation to be mastered in a short period of time.

Moreover, since the switching of the sound output is carried out using the sound volume plus button SP, the sound output from the speaker 106 is prevented frombeing switched without intention when the operation of changing the size of the right picture R or the left picture L is carried out in the two-picture mode.

Furthermore, the user presses the sound volume plus button SP, which is a familiar operation for the user, thereby causing the sound corresponding to the picture having the focus to be output. Moreover, the user presses the sound volume plus button SP when the sound corresponding to the picture not having the focus is output, thereby causing the sound corresponding to the picture having the focus to be output. Accordingly, the user can master the operation of switching the sound output in a short period of time.

In addition, since the operation method of the right picture R and the left picture L and the change of display are made symmetrical to each other, the user can easily understand.

Moreover, the right button AR, the left button AL and the picture mode button PM are not used for the change of the sizes of the right picture R and the left picture L, the transfer of the focus and the switching of the sound output. Thus, various operations carried out using the right button AR, the left button AL and the picture mode button PM are not restricted in the two-picture mode.

For example, various setting in a hierarchical menu and an operation of a data broadcast picture can be carried out using the right button AR and the left button AL in the two-picture mode. In addition, change of an aspect ratio of the picture and switching of side-cutting can be carried out using the picture mode button PM in the two-picture mode.

Furthermore, the display in the two-picture mode can be controlled only by adding the right picture plus button BR and the left picture plus button BL in the remote controller 107a. Moreover, the sound output can be switched by the existing sound volume plus button SP in the two-picture mode. Accordingly, a designer can readily add a button for operating other functions in the remote controller 107a.

### (2) Second Embodiment

Hereinafter, a video display device according to a second embodiment of the present invention will be described. The configuration of the video display device according to the present embodiment is the same as the configuration of the video display device 100 shown in Fig. 1. The configuration of the remote controller 107a of the input unit 107 is the same as the configuration of the remote controller 107a shown in Fig. 2.

### (2-1) Description of the Picture Modes

In the second embodiment, although the transition of the picture in the two-picture mode is the same as that in the first embodiment, a method of switching the sound output is different from that in the first embodiment. In the second embodiment, when the size of the right picture R or the left picture L is changed by the right picture plus button BR or the left picture plus button BL, the sound corresponding to the picture that is increased in size is output.

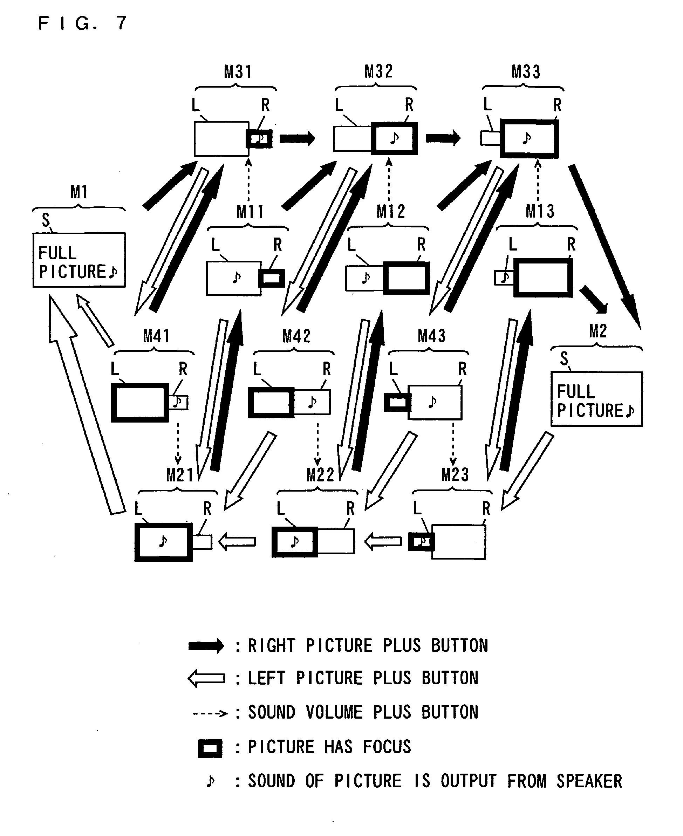

Fig. 7 is a state transition diagram of picture display and sound output in the second embodiment of the present invention.

When the right picture plus button BR is pressed in the two-picture modes M11, M12 in which the sound corresponding to the left picture L is output, the picture modes shift to the two-picture modes M32, M33, respectively. Thus, the sound corresponding to the right picture R is output from the speaker 106 while the right picture R is increased in size.

When the left picture plus button BL is pressed in the two-picture modes M43; M42 in which the sound corresponding to the right picture R is output, the picture modes shift to the two-picture modes M22, M21, respectively. Thus, the sound corresponding to the left picture L is output from the speaker 106 while the left picture L is increased in size.

Also in the present embodiment, the sound corresponding to the right picture R or the left picture L is output at zero sound volume when the sound selector 105 is set in the mute state by the mute button MB. That is, although the sound signal corresponding to the right picture R or the left picture L is selected, the sound is not output from the speaker 106.

The rest of the picture display and the switching of the sound output in the second embodiment is carried out in the same manner as that in the first embodiment.

When the right picture plus button BR is pressed in the one-picture mode M1, the picture mode shifts to the two-picture mode M31. Thus, the right picture R is added while the sound corresponding to the right picture R is output. Moreover, when the left picture plus button BL is pressed in the one-picture mode M2, the picture mode shifts to the two-picture mode M23. Thus, the left picture L is added while the sound corresponding to the left picture L is output.

As described above, the sound corresponding to the right picture R is output when the right picture R is increased in size by pressing the right picture plus button BR, and the sound corresponding to the left picture L is output when the left picture L is increased in size by pressing the left picture plus button BL in the second embodiment.

### (2-2) Display Control Processing

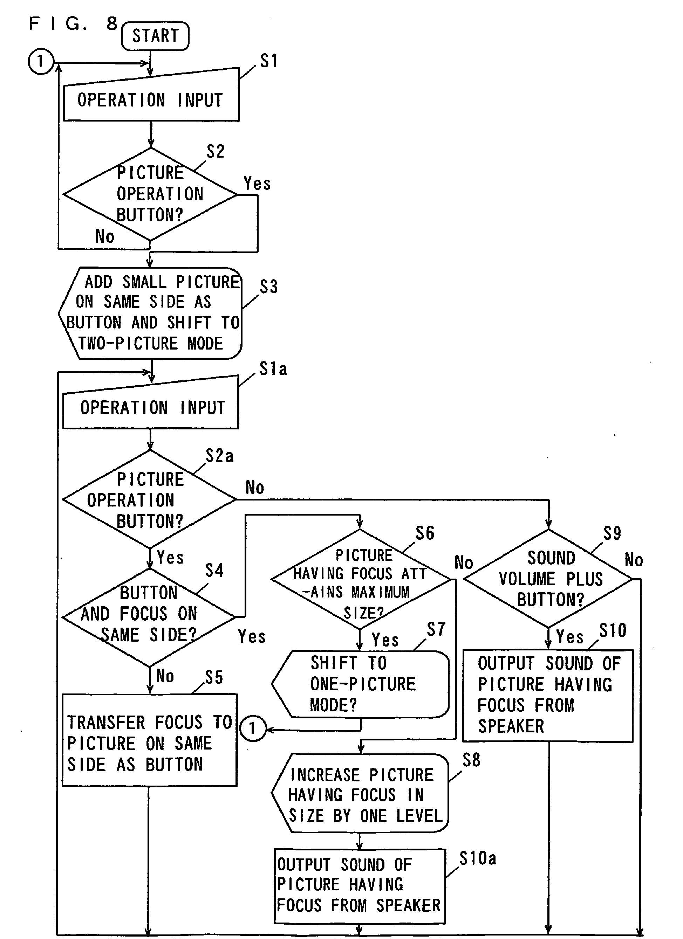

Fig. 8 is a flowchart showing display control processing of the picture transition controller 108 in the second embodiment of the present invention.

In the display control processing in the present embodiment, Step S10a following Step S8 in Fig. 5 is added.

When the operated picture operation button and the picture having the focus are on the same side in Step S4 and the picture having the focus is smaller than the maximum size in Step S6, the picture transition controller 108 increases the picture having the focus in size by one level in Step S8.

Furthermore, the picture transition controller 108 causes the sound corresponding to the picture having the focus to be output from the speaker 106 (Step S10a). Thus, the sound corresponding to the picture that is increased in size is output.

Specifically, when the user operates the right picture plus button BR and the focus exists in the right picture R, the video synthesizer 103 increases the right picture R in size by one level and reduces the left picture L in size by one level based on the instruction of the picture transition controller 108. Further, the sound selector 105 causes the sound corresponding to the right picture R to be output from the speaker 106 based on the instruction of the picture transition controller 108.

Conversely, when the user operates the left picture plus button BL and the focus exists in the left picture L, the video synthesizer 103 increases the left picture L in size by one level and reduces the right picture R in size by one level based on the instruction of the picture transition controller 108. Further, the sound selector 105 causes the sound corresponding to the left picture L to be output from the speaker 106 based on the instruction of the picture transition controller 108.

Similarly to the first embodiment, the processes when the user operates the sound volume plus button SP are realized in Steps S9, S10.

When the sound volume plus button SP is operated by the user in Step S9, the picture transition controller 108 causes the sound corresponding to the picture having the focus to be output from the speaker 106 in Step S10. Accordingly, the sound output can be switched by operating the sound volume plus button SP without changing the size of the picture.

As described above, the sound output can be switched in the two different manners, thus improving convenience.

### (2-3) Effects of the Second Embodiment

As described above, the sound corresponding to the right picture R is output when the user presses the right picture plus button BR to increase the right picture R in size, and the sound corresponding to the left picture L is output when the user presses the left picture plus button BL to increase the left picture L in size in the present embodiment. Normally, the user pays attention to the picture that is increased in size. Thus, the sound corresponding to the picture to which the user pays attention is output, so that the user can naturally view video in the two-picture mode without any uncomfortable feeling.

Moreover, the user presses the sound volume plus button SP, which is a familiar operation for the user, thereby causing the sound corresponding to the picture having the focus to be output. Moreover, the user presses the sound volume plus button SP when the sound corresponding to the picture not having the focus is output, so that the sound corresponding to the picture having the focus is output. Accordingly, the user can master the operation of switching the sound output in a short period of time.

Furthermore, similarly to the first embodiment, the switching of the one-picture mode and the two-picture mode, the change of the sizes of the right picture R and the left picture L and the transfer of the focus can be carried out using the right picture plus button BR and the left picture plus button BL. This causes the operation method to be easy and the operation to be mastered in a short period of time.

In addition, since the operation method of the right picture R and the left picture L and the change of display are made symmetrical to each other, the user can easily understand. Moreover, various operations carried out using the right button AR, the left button AL and the picture mode button PM not restricted in the two-picture mode.

Furthermore, display in the two-picture mode can be controlled only by adding the right picture plus button BR and the left picture plus button BL in the remote controller 107a, and the sound output can be switched in the two-picture mode by the existing sound volume plus button SP. Accordingly, a designer can readily add a button for operating other functions in the remote controller 107a.

### (3) Third Embodiment

Hereinafter, a display control device according to a third embodiment of the present invention will be described. The configuration of the video display device according to the present embodiment is the same as the configuration of the video display device 100 shown in Fig. 1. The configuration of the remote controller 107a of the input unit 107 is the same as the configuration of the remote controller 107a shown in Fig. 2.

### (3-1) Description of the Picture Modes

The third embodiment is different from the first and second embodiments in a method of switching the sound output. In the third embodiment, the sound volume plus button SP is not used for switching the sound output, and the sound corresponding to the right picture R or the left picture L is output when the right picture plus button BR or the left picture plus button BL is pressed, respectively.

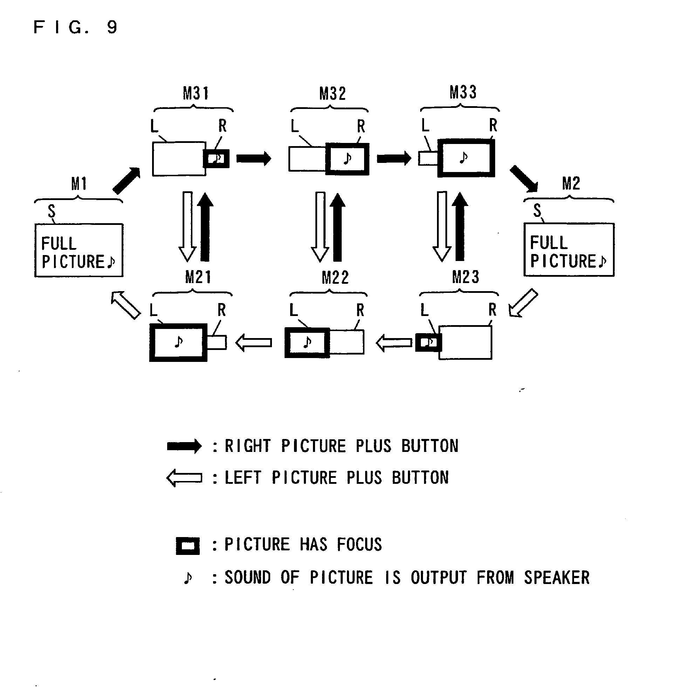

Fig. 9 is a state transition diagram of picture display and sound output in the third embodiment of the present invention.

When the right picture plus button BR is pressed in the two-picture modes M21 to M23 in which the sound corresponding to the left picture L is output, the picture modes shift to the two-picture modes M31 to M33, respectively. Thus, the focus moves to the right picture R while the sound corresponding to the right picture R is output from the speaker 106.

Moreover, when the left picture plus button BL is pressed in the two-picture modes M31 to M33 in which the sound corresponding to the right picture R is output, the picture modes shift to the two-picture modes M21 to M23, respectively. Thus, the focus moves to the left picture L while the sound corresponding to the left picture L is output from the speaker 106.

Also in the present embodiment, when the sound selector 105 is set in the mute state by the mute button MB, the sound corresponding to the right picture R or the left picture L is output at zero sound volume. That is, although the sound signal corresponding to the right picture R or the left picture L is selected, the sound is not output from the speaker 106.

In the third embodiment, the two-picture modes M11 to M13, M41 to M43 of the second embodiment do not exist.

As described above, the focus is set in the right picture R and the sound corresponding to the right picture R is output by pressing the right picture plus button BR, and the focus is set in the left picture L and the sound corresponding to the left picture L is output by pressing the left picture plus button BL in the third embodiment.

### (3-2) Display Control Processing

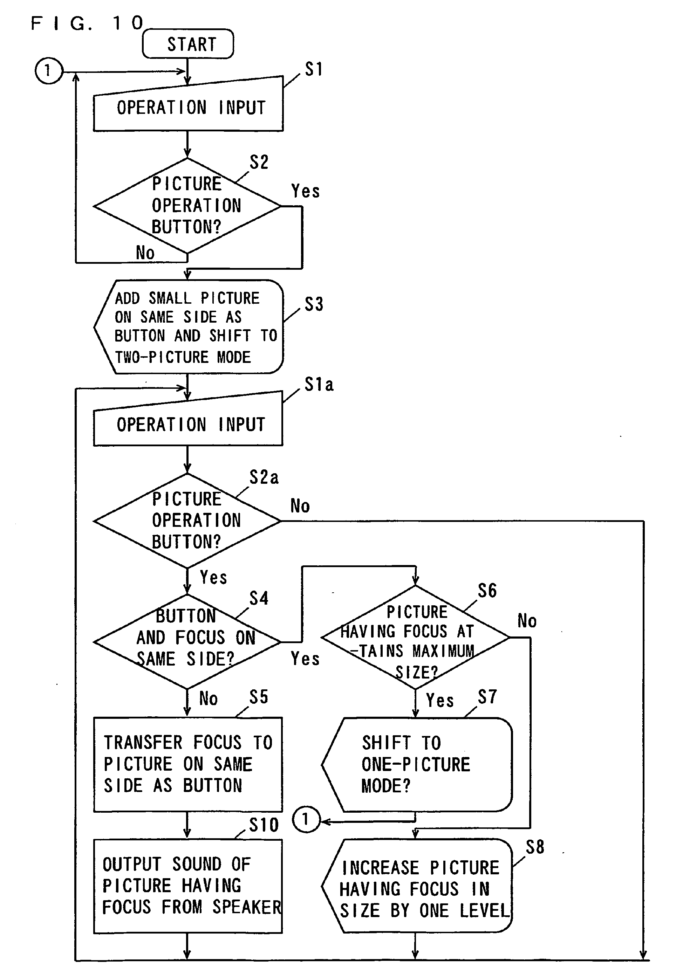

Fig. 10 is a flowchart showing display control processing of the picture transition controller 108 in the third embodiment of the present invention.

In the display control processing in the present embodiment, Step S10 following Step S5 of Fig. 5 is provided and Step S9 of Fig. 5 is not provided.

When the operated picture operation button and the picture having the focus are on the opposite side to each other in Step S4, the picture transition controller 108 moves the focus to the picture on the same side as the operated picture operation button in Step S5. Moreover, the picture transition controller 108 causes the sound corresponding to the picture having the focus to be output from the speaker 106 (Step S10). Thus, the sound corresponding to the picture having the focus is output.

Specifically, when the user operates the right picture plus button BR and the focus exists in the left picture L, the video synthesizer 103 moves the focus to the right picture R based on the instruction of the picture transition controller 108. In addition, the sound selector 105 causes the sound corresponding to the right picture R to be output from the speaker 106 based on the instruction of the picture transition controller 108.

Conversely, when the user operates the left picture plus button BL and the focus exists in the right picture R, the video synthesizer 103 moves the focus to the left picture L based on the instruction of the picture transition controller 108. Moreover, the sound selector 105 causes the sound corresponding to the left picture L to be output from the speaker 106 based on the instruction of the picture transition controller 108.

When the picture operation button is not operated by the user in Step S2a, the picture transition controller 108 returns to the process of Step S1a.

Thus, the sound volume plus button SP is not used for switching the sound output, and used only for increasing the sound volume.

### (3-3) Effects of the Third Embodiment

As described above, the focus is set in the right picture R and the sound corresponding to the right picture R is output as the user presses the right picture plus button BR, and the focus is set in the left picture L and the sound corresponding to the left picture L is output as the user presses the left picture plus button BL in the present embodiment. Normally, the user pays attention to the picture that is operable. Thus, the sound corresponding to the picture to which the user pays attention is output, so that the user can naturally view video in the two-picture mode without any uncomfortable feeling.

Also in the present embodiment, the sound corresponding to the right picture R is output when the user presses the right picture plus button BR to increase the right picture R in size, and the sound corresponding to the left picture L is output when the user presses the left picture plus button BL to increase the left picture L in size. Normally, the user pays attention to the picture that is increased in size. Accordingly, the sound corresponding to the picture to which the user pays attention is output, so that the user can naturally view video in the two-picture mode without any uncomfortable feeling.

Further, the user can switch the one-picture mode and the two-picture mode, change the sizes of the pictures in the two-picture mode, move the focus and switch the sound output by operating the right picture plus button BR and the left picture plus button BL. This causes the operation method to be easy and the operation to be mastered in a short period of time.

Similarly to the first embodiment, since the operation method of the right picture R and the left picture L and the change of display are made symmetrical to each other, the user can easily understand. In addition, various operations carried out using the right button AR, the left button AL and the picture mode button PB are not restricted in the two-picture mode.

Furthermore, display in the two-picture mode can be controlled and the sound output in the two-picture mode can be switched by only adding the right picture plus button BR and the left picture plus button BL in the remote controller 107a. Accordingly, a designer can readily add a button for operating other functions in the remote controller 107a.

### (4) Fourth Embodiment

Hereinafter, a video display device according to a fourth embodiment of the present invention will be described. The configuration of the video display device according to the present embodiment is the same as the configuration of the video display device 100 shown in Fig. 1. The configuration of the remote controller 107a of the input unit 107 is the same as the configuration of the remote controller 107a shown in Fig. 2.

### (4-1) Description of the Picture Modes

Similarly to the third embodiment, the sound volume plus button SP is not used for switching the sound output, and the right picture plus button BR or the left picture plus button BL is used in the fourth embodiment. However, the fourth embodiment is different from the third embodiment in timings of switching the sound output and transferring the focus.

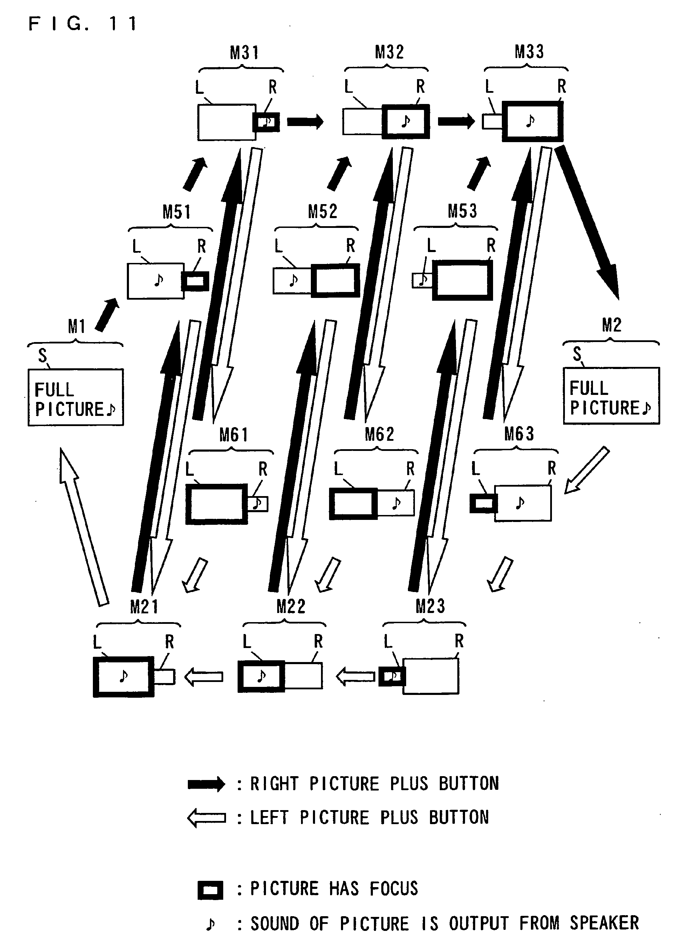

Fig. 11 is a state transition diagram of picture display and sound output in the fourth embodiment of the present invention.

When the right picture plus button BR is pressed in the two-picture modes M21 to M23 in which the sound corresponding to the left picture L is output, the picture modes shift to two-picture modes M51 to M53, respectively. Thus, the focus moves to the right picture R. In this case, the sound corresponding to the left picture L is output. Furthermore, when the right picture plus button BR is pressed, the picture modes shift to the two-picture modes M31 to M33, respectively. Thus, the sound corresponding to the right picture R is output from the speaker 106.

Also when the right picture plus button BR is pressed in the one-picture mode M1, the picture mode shifts to the two-picture mode M51. Thus, the focus moves to the right picture R.

When the left picture plus button BL is pressed in the two-picture modes M31 to M33 in which the sound corresponding to the right picture R is output, the picture modes shift to two-picture modes M61 to M63, respectively. Thus, the focus moves to the left picture L. In this case, the sound corresponding to the right picture R is output. Furthermore, when the left picture plus button BL is pressed, the picture modes shift to the two-picture modes M21 to M23, respectively. Thus, the sound corresponding to the left picture L is output from the speaker 106.

Also when the left picture plus button BL is pressed in the one-picture mode M2, the picture mode shifts to the two-picture mode M63. Thus, the focus moves to the left picture L.

Also in the present embodiment, the sound corresponding to the right picture R or the left picture L is output at zero sound volume when the sound selector 105 is set in the mute state by the mute button MB. That is, although the sound signal corresponding to the right picture R or the left picture L is selected, the sound is not output from the speaker 106.

As described above, the focus is set in the right picture R by pressing the right picture plus button BR and the sound corresponding to the right picture R is subsequently output by again pressing the right picture plus button BR, and the focus is set in the left picture L by pressing the left picture plus button BL and the sound corresponding to the left picture L is output by again pressing the left picture plus button BL in the fourth embodiment.

### (4-2) Display Control Processing

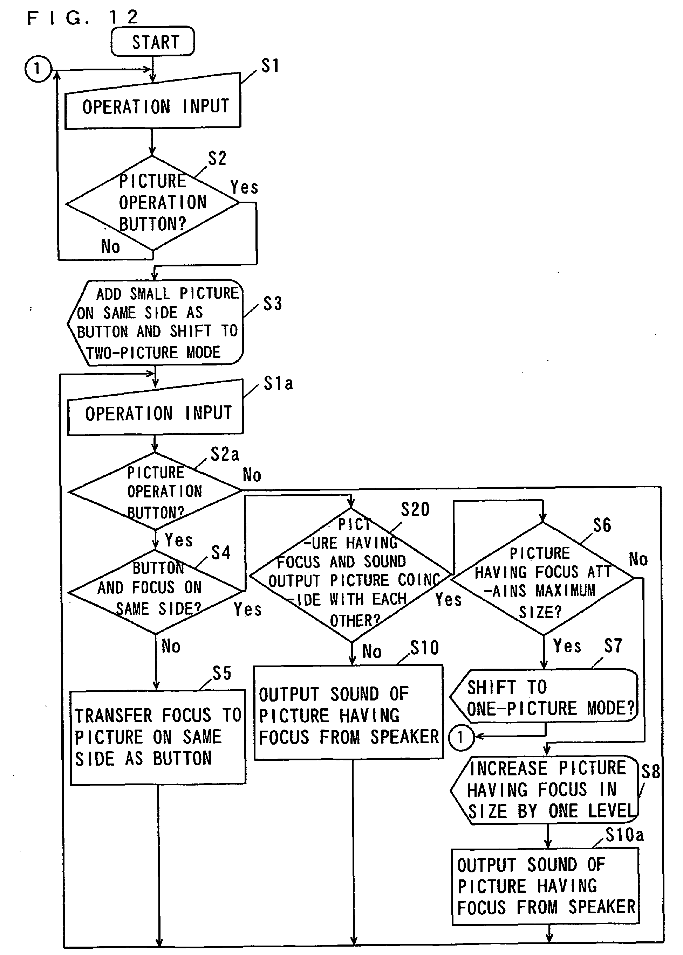

Fig. 12 is a flowchart showing display control processing of the picture transition controller 108 in the fourth embodiment of the present invention.

In the display control processing in the present embodiment, Step S20 is provided between Step S4 and Step S6 of Fig. 10, and Step S10a following Step S8 of Fig. 10 is provided. Step S10 is provided not after Step S5, but after Step S20.

When the operated picture operation button and the picture having the focus are on the opposite side to each other in Step S4, the picture transition controller 108 moves the focus to the picture on the same side as the operated picture operation button (Step S5).

When the operated picture operation button and the picture having the focus are on the same side in Step S4, the picture transition controller 108 determines whether or not the picture having the focus and the picture (the sound output picture) corresponding to the output sound coincide with each other (Step S20).

When the picture having the focus and the picture (the sound output picture) corresponding to the output sound do not coincide with each other, the picture transition controller 108 causes the sound corresponding to the picture having the focus to be output from the speaker 106 (Step S10).

When the picture having the focus and the picture (the sound output picture) corresponding to the output sound coincide with each other in Step S20, the picture transition controller 108 determines whether or not the picture having the focus has the maximum size (Step S6).

When the picture having the focus has the maximum size, the picture transition controller 108 shifts the picture mode to the one-picture mode (Step S7).

When the picture having the focus is smaller than the maximum size in Step S6, the picture transition controller 108 increases the picture having the focus in size by one level (Step S8). Simultaneously, the picture transition controller 108 reduces the picture not having the focus in size by one level.

Furthermore, the picture transition controller 108 causes the sound corresponding to the picture having the focus to be output from the speaker 106 (Step S10a). Thus, the sound corresponding to the picture that is increased in size is output.

When the picture operation button is not operated by the user in Step S2a, the picture transition controller 108 returns to the process of Step S1a.

Thus, the sound volume plus button SP is not used for switching the sound output, and used only for increasing the sound volume.

### (4-3) Effects of the Fourth Embodiment

As described above, the focus is set in the right picture R as the user presses the right picture plus button BR, and the sound corresponding to the right picture R is output as the user again presses the right picture plus button BR in the present embodiment. Moreover, the focus is set in the left picture L as the user presses the left picture plus button BL, and the sound corresponding to the left picture L is output as the user again presses the left picture plus button BL. Accordingly, the user can carry out the transfer of the focus independently from the switching of the sound output.

In addition, the sound corresponding to the picture having the focus can be output as the user presses the right picture plus button BR twice. Normally, the user pays attention to the picture that is operable. Accordingly, the sound corresponding to the picture to which the user pays attention is output, so that the user can naturally view video in the two-picture mode without any uncomfortable feeling.

Also in the present embodiment, the sound corresponding to the right picture R is output when the user presses the right picture plus button BR to increase the right picture R in size, and the sound corresponding to the left picture L is output when the user presses the left picture plus button BL to increase the left picture L in size. Normally, the user pays attention to the picture that is increased in size. Thus, the sound corresponding to the picture to which the user pays attention is output, so that the user can naturally view video in the two-picture mode without any uncomfortable feeling.

Furthermore, the user can switch the one-picture mode and the two-picture mode, change the sizes of the pictures in the two-picture mode, transfer the focus and switch the sound output by operating the right picture plus button BR and the left picture plus button BL. This causes the operation method to be easy and the operation to be mastered in a short period of time.

Similarly to the first embodiment, since the operation method of the right picture R and the left picture L and the change of display are made symmetrical to each other, the user can easily understand. In addition, various operations carried out using the right button AR, the left button AL and the picture mode button PM are not restricted in the two-picture mode.

Furthermore, display in the two-picture mode can be controlled and the sound output in the two-picture mode can be switched only by adding the right picture plus button BR and the left picture plus button BL in the remote controller 107a. Accordingly, a designer can readily add a button for operating other functions in the remote controller 107a.

### (5) First Example

Hereinafter, a video display device according to a first example will be described. The configuration of the video display device according to the present example is the same as the configuration of the video display device 100 shown in Fig. 1.

### (5-1) Example of the Remote Controller

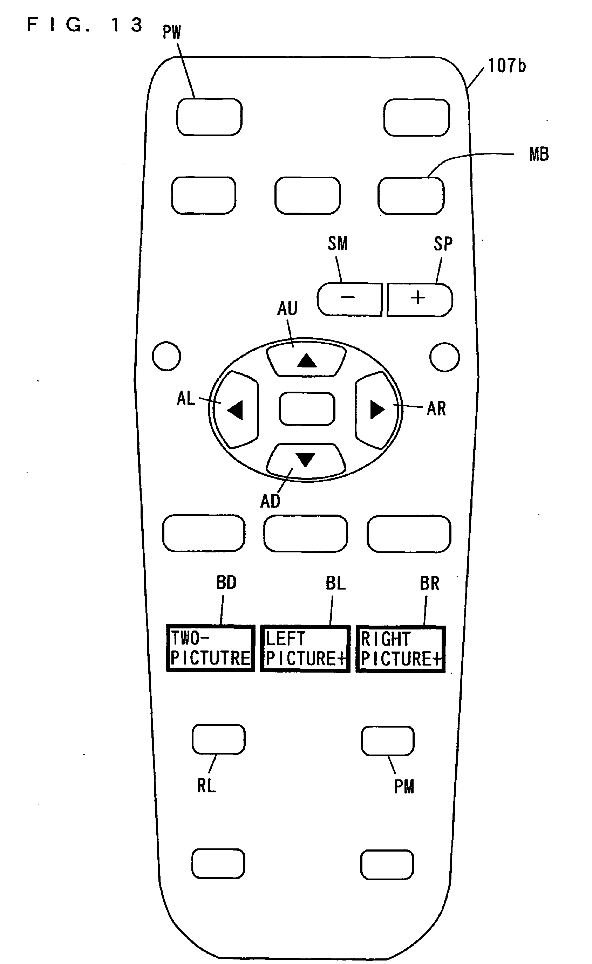

Fig. 13 is a schematic view showing an example of the remote controller included in the input unit 107 of the video display device according to the first example.

The remote controller 107b of Fig. 13 is different from the remote controller 107a of Fig. 2 in that a two-picture button BD is further provided.

The two-picture button BD is operated by the user for switching the one-picture mode and the two-picture mode by toggle.

Note that the right picture plus button BR and the left picture plus button BL of Fig. 3 (a), (b), (c) may be provided instead of the right picture plus button BR and the left picture plus button BL of Fig. 13.

### (5-2) Description of the Picture Modes

Although the transition of the picture in the two-picture mode in the first example is the same as that in the first embodiment, the method of switching the one-picture mode and the two-picture mode is different from that in the first embodiment. In the first example, the one-picture mode and the two-picture mode are switched by the two-picture button BD.

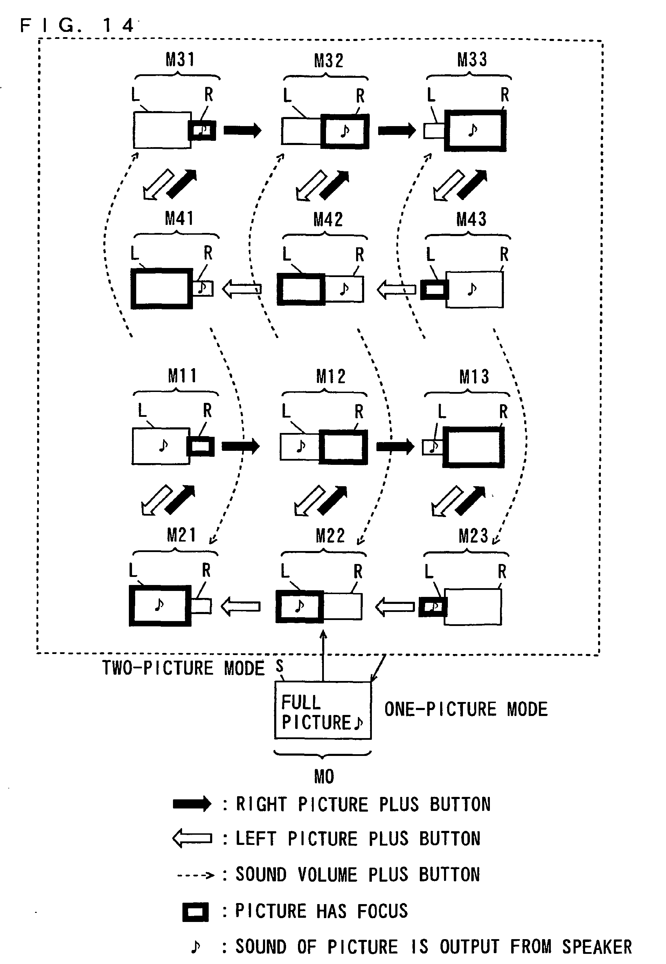

Fig. 14 is a state transition diagram of picture display and sound output in the first example.

The full picture S is displayed in the one-picture mode M0. When the two-picture button BD is pressed in the one-picture mode M1, the picture mode shifts to the two-picture mode M22. In the two-picture mode M22, the right picture R and the left picture L have the same size, and the left picture L has the focus and the sound corresponding to the left picture L is output.

Conversely, when the two-picture button BD is pressed in the two-picture modes M11 to M13, M21 to M23, M31 to M33, M41 to M43, the picture mode shifts to the one-picture mode M0.

In this manner, the two-picture button BD is pressed, so that the one-picture mode M0 and the two-picture mode are switched by toggle.

Note that the picture mode may shift to the two-picture mode M32 as the two-picture button BD is pressed in the one-picture mode M0. In the two-picture mode M32, the right picture R and the left picture L have the same size, and the right picture R has the focus and the sound corresponding to the right picture R is output. Moreover, the picture mode may be set to fixedly shift to another two-picture mode as the two-picture button BD is pressed. Furthermore, the picture transition controller 108 may store the two-picture mode immediately before the shift to the one-picture mode M0 to cause the picture mode to shift to the stored two-picture mode as the two-picture button BD is pressed.

The transition of the state among the two-picture modes M11 to M13, M21 to M23, M31 to M33, M41 to M43 is the same as that in the first embodiment.

In the present example, however, when the right picture plus button BR is pressed in the two-picture modes M13, M33 in which the right picture R has the maximum size, the picture mode does not shift to the one-picture mode M0. Similarly, when the left picture plus button BL is pressed in the two-picture modes M21, M41 in which the left picture L has the maximum size, the picture mode does not shift to the one-picture mode M0.

In addition, when the sound volume plus button SP is pressed, the sound corresponding to the picture having the focus is output. Unless the sound volume plus button SP is pressed, the sound output is not switched. As described above, the operation of changing the sizes of the right picture R and the left picture L and the operation of switching the sound output are completely independent from each other.

### (5-3) Display Control Processing

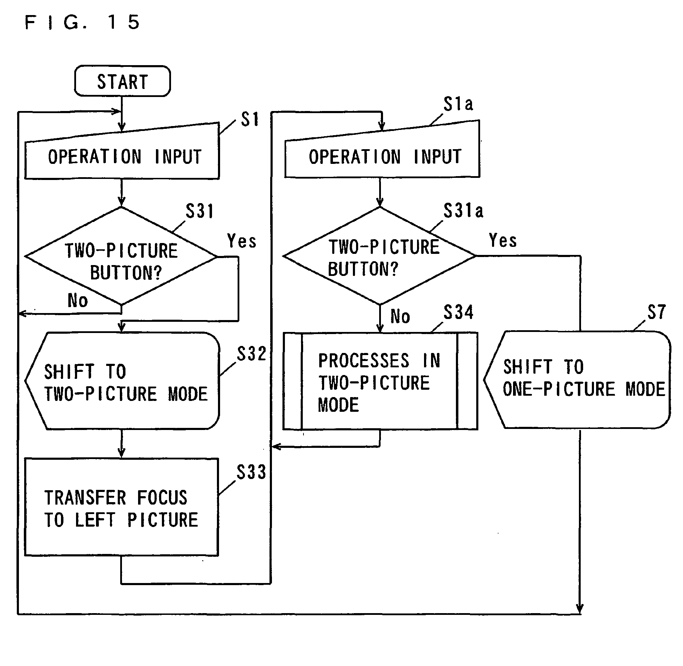

Fig. 15 is a flowchart showing display control processing of the picture transition controller 108 in the first example.

Steps S1, S31 are processes in the one-picture mode, Steps S33, S1a, S31a, S34 are processes in the two-picture mode, and Steps S32, S7 are processes in the transitional state between the one-picture mode and the two-picture mode.

In the initial state, the picture mode is set in the one-picture mode. When the user operates the input unit 107, the picture transition controller 108 receives the operating information (operation input) representing the content of a user operation from the input unit 107 (Step S1).

The picture transition controller 108 determines based on the operating information whether or not the two-picture button BD is operated by the user (Step S31).

When the two-picture button BD is operated by the user, the picture transition controller 108 shifts the picture mode to the two-picture mode M22 (Step S32), and transfers the focus to the left picture L (Step S33).

In this case, the picture transition controller 108 may fixedly shift the picture mode to another two-picture modes as the two-picture button BD is pressed. Moreover, the picture transition controller 108 may shift the picture mode to the two-picture mode immediately before the shift to the one-picture mode M0 as the two-picture button BD is pressed.

When the two-picture button BD is not operated by the user in Step S31, the picture transition controller 108 carries out other processes and then returns to the process of Step S1.

Next, when the user operates the input unit 107, the picture transition controller 108 receives the operating information (operation input) representing the content of a user operation from the input unit 107 (Step S1a).

The picture transition controller 108 determines based on the operating information whether or not the two-picture button BD is operated by the user (Step S31a).

When the two-picture button BD is operated by the user, the picture transition controller 108 shifts the picture mode to the one-picture mode M0 (Step S7). Thereafter, the picture transition controller 108 returns to the process of Step S1.

When the two-picture button BD is not operated by the user in Step S31a, the picture transition controller 108 executes the processes in the two-picture mode, described later (Step S34). Thereafter, the picture transition controller 108 returns to the process of Step Sla.

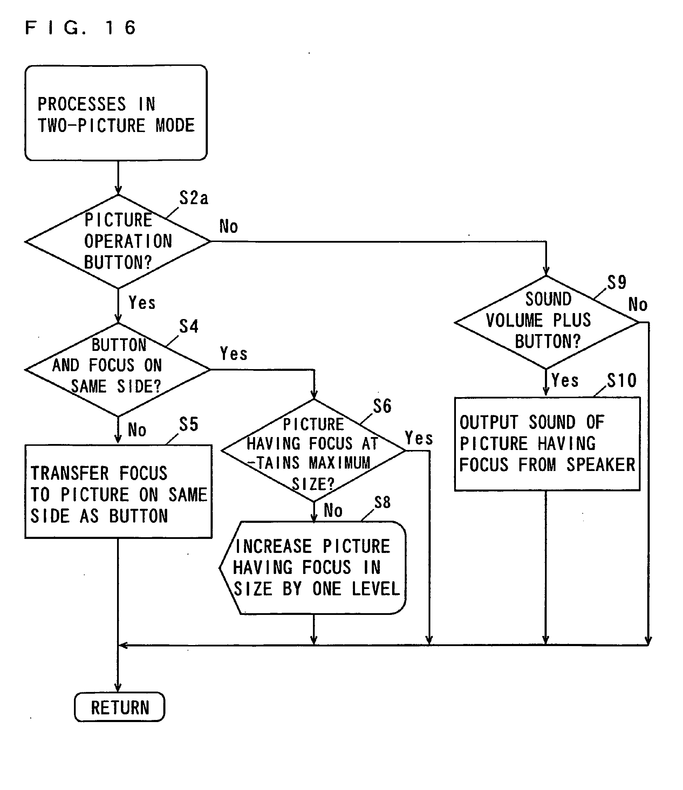

Fig 16 is a flowchart showing the processes in the two-picture mode of the display control processing in the first example.

In the processes in the two-picture mode of Fig. 16, Step S7 is deleted from the processes constituted by Steps S2a and S4 to S10 in the two-picture mode of the first embodiment. Accordingly, even though the user presses the picture operation buttons (the right picture plus button BR and the left picture plus button BL), the picture mode cannot shift to the one-picture mode.

### (5-4) Effects of the First Example

As described above, the user can switch the one-picture mode and the two-picture mode by pressing the two-picture button BD in the present example. In this case, since the button that should be operated for switching the one-picture mode and the two-picture mode can be clearly recognized, the user can easily switch the one-picture mode and the two-picture mode without worry.

In addition, even though the right picture plus button BR or the left picture plus button BL is pressed a plurality of times in a row in the two-picture mode, the picture mode does not return to the one-picture mode. Thus, the size of the right picture R or the left picture L can be easily maximized.

Moreover, since the sound output is switched using the sound volume plus button SP, the sound output from the speaker 106 is prevented from being switched without intention when the size of the right picture R or the left picture L is changed in the two-picture mode.

Furthermore, the user presses the sound volume plus button SP, which is a familiar operation for the user, so that the sound corresponding to the picture having the focus is output. In addition, the user presses the sound volume plus button SP when the sound corresponding to the picture not having the focus is output, so that the sound corresponding to the picture having the focus is output. Thus, the user can master the operation of switching the sound output in a short period of time.

Furthermore, the switching of the one-picture mode and the two-picture mode, the change of the sizes of the right picture R and the left picture L and the transfer of the focus can be carried out using the picture mode button PM, the right picture plus button BR and the left picture plus button BL. This causes the operation method to be easy and the operation to be mastered in a short period of time.

In addition, similarly to the first embodiment, since the operation method of the right picture R and the left picture L and the change of display are made symmetrical to each other, the user can easily understand. Moreover, various operations carried out using the right button AR, the left button AL and the picture mode button PM are not restricted in the two-picture mode.

Furthermore, the one-picture mode and the two-picture mode can be switched and display in the two-picture mode can be controlled only by adding the two-picture button BD, the right picture plus button BR and the left picture plus button BL in the remote controller 107b, and the sound output in the two-picture mode can be switched using the existing sound volume plus button SP. Accordingly, a designer can readily add a button for operating other functions in the remote controller 107b.

### (6) Correspondences between elements in the claims and parts in embodiments

In the following paragraphs, non-limiting examples of correspondences between various elements recited in the claims below and those described above with respect to various preferred embodiments of the present invention are explained.

In the above-described embodiments, the video synthesizer 103, the sound selector 105 and the picture transition controller 108 are examples of a controller, the right picture plus button BR is an example of a first operation input portion, and the left picture plus button BL is an example of a second operation input portion. The sound volume plus button SP is an example of a sound operation input portion or a sound volume operation input portion, the right button AR, the left button AL or the picture mode button PM is an example of another operation input portion, and the two-picture button BD is an example of a picture mode operation input portion. The screen of the display 104 is an example of a screen, and the speaker 106 is an example of a sound output unit. The right picture R or the left picture L is an example of video displayed in a first region, the left picture L or the right picture R is an example of video displayed in a second region, and the full picture S is an example of video displayed in a single region. The CPU is an example of a computer.

As each of various elements recited in the claims, various other elements having configurations or functions described in the claims can be also used.

### (7) Other Embodiments

While the picture transition controller 108 is implemented by the CPU and the display control program in the above-described embodiments, the present invention is not limited to this. For example, the picture transition controller 108 may be implemented by hardware such as an electronic circuit.

The video synthesizer 103 may be implemented by the CPU and the program, or may be implemented by hardware such as an electronic circuit.

Similarly, the sound selector 105 may be implemented by the CPU and the program, or may be implemented by hardware such as an electronic circuit.

### [Industrial Applicability]

The present invention is useful for simultaneously displaying video in a two-picture mode in a video display device and the like that display video based on a signal frombroadcasting, communications, a media package or the like.

Therefore, the present invention is applicable to a television receiver or a set-top box that receives a broadcast from a television station, and is useful in applications such as a video recorder that records video in a hard disk or a DVD, a DVD player or an AV (audio and visual) viewer that plays a media package, a broadband receiver that receives a broadcast from an internet broadcast station or the like.

## Claims

1. A display control device (100) that controls a one-picture mode in which video is displayed in a single region (S) on a screen (SC) and a two-picture mode in which video is displayed in each of first and second regions (R, L) on said screen (SC), comprising:
a first operation input portion (BR) that receives a first operation input caused by a user operation; and
a controller (108) that controls display of the video in said one-picture mode and said two-picture mode, wherein
said controller (108),
when a picture mode is said one-picture mode, in response to said first operation input from said first operation input portion (BR), changes the picture mode to said two-picture mode such that said first region (R) becomes smaller than said second region (L), and that said second region (L) becomes smaller than said single region (S), displays the video that has been displayed in said one-picture mode in said second region (L) and new video in said first region (R) and sets said first region (R) to an operable region,
when the picture mode is said two-picture mode and said second region (L) is, set to the operable region, in response to said first operation input from said first operation input portion (BR), changes the operable region to said first region (R),
when the picture mode is said two-picture mode and said first region (R) is set to the operable region, in response to said first operation input from said first operation input portion (BR), increases said first region (R) in size and reduces said second region (L) in size, and
when the picture mode is said two-picture mode and said first region (R) attains a maximum size in said two-picture mode, in response to said first operation input from said first operation input portion (BR), changes the picture mode to said one-picture mode and displays the video that has been displayed in said first region (R) in said single region (S) wherein various operations such as setting various functions, inputting various data and inputting various instructions can be carried out by the user on the video displayed in the operable region.

2. The display control device (100) according to claim 1, further comprising a second operation input portion (BL) that receives a second operation input caused by a user operation, wherein
said controller (108),
when the picture mode is said one-picture mode, in response to said second operation input from said second operation input portion (BL), changes the picture mode to said two-picture mode such that said second region (L) becomes smaller than said first region (R), and that said first region (R) becomes smaller than said single region (S), displays video that has been displayed in said one-picture mode in said first region (R) and new video in said second region (L) and sets said second region (L) to the operable region,
when the picture mode is said two-picture mode and said first region (R) is set to the operable region, in response to said second operation input from said second operation input portion (BL), changes the operable region to said second region (L),
when the picture mode is said two-picture mode and said second region (L) is set to the operable region, in response to said second operation input from said second operation input portion (BL), increases said second region (L) in size and reduces said first region (R) in size, and
when the picture mode is said two-picture mode and said second region (L) attains a maximum size in said two-picture mode, in response to said second operation input from said second operation input portion (BL), changes the picture mode to said one-picture mode and displays the video that has been displayed in said second region (L) in said single region (S).

3. The display control device (100) according to claim 2, further comprising another operation input portion used by a user for a predetermined operation in said single region in said one-picture mode and for a predetermined operation in the operable region of said first and second regions (R, L) in said two-picture mode, wherein
said first and second operation input portions (BR, BL) are provided separately from said another operation input portion.

4. The display control device (100) according to claim 2, further controlling a sound output unit (106) outputting sound and further comprising a sound operation input portion (SP) that receives a sound operation input caused by a user operation, wherein
said controller (108) causes sound corresponding to video displayed in the operable region to be output from said sound output unit (106) in response to said sound operation input from said sound operation input portion (SP) when the picture mode is said two-picture mode.

5. The display control device (100) according to claim 2, further controlling a sound output unit (106) that outputs sound, wherein said controller (108) causes sound corresponding to video displayed in the operable region to be output from said sound output unit (106) when the picture mode is said two-picture mode.

6. The display control device (100) according to claim 2, further controlling a sound output unit (106) that outputs sound, wherein
said controller (108) causes sound corresponding to video displayed in the operable region to be output from said sound output unit (106) in response to said first or second operation input (BR, BL) from said first or second operation input portion when the picture mode is said two-picture mode and sound corresponding to video displayed in a region that is not operable is output from said sound output unit (106), and
increases said first region (R) in size and reduces said second region (L) in size in response to said first operation input from said first operation input portion (BR), and increases said second region (L) in size and reduces said first region (R) in size in response to said second operation input from said second operation input portion (BL) when the picture mode is said two-picture mode and the sound corresponding to the video displayed in the operable region is output from said sound output unit (106).

7. The display control device (100) according to claim 2, further controlling a sound output unit (106) that outputs sound, wherein said controller (108) causes sound corresponding to video displayed in said one-picture mode to be output from said sound output unit (106) when the picture mode is changed from said two-picture mode to said one-picture mode.

8. A display control method for controlling a one-picture mode in which video is displayed in a single region (S) on a screen (SC) and a two-picture mode in which video is displayed in each of first and second regions (R, L) on said screen (SC), comprising the steps of:
when a picture mode is said one-picture mode, in response to a first operation input from a first operation input portion (BR), changing (S3) the picture mode to said two-picture mode such that said first region (R) becomes smaller than said second region (L), and that said second region (L) becomes smaller than said single region (S), displaying video that has been displayed in said one-picture mode in said second region (L) and new video in said first region (R) and setting said first region (R) to an operable region;
when the picture mode is said two-picture mode and said second region (L) is set to the operable region, in response to said first operation input from said first operation input portion (BR), changing (S5) the operable region to said first region (R);
when the picture mode is said two-picture mode and said first region (R) is set to the operable region, in response to said first operation input from said first operation input portion (BR), increasing (S8) said first region (R) in size and reducing said second region (L) in size; and
when the picture mode is said two-picture mode and said first region (R) attains a maximum size in said two-picture mode, in response to said first operation input from said first operation input portion (BR), changing (S7) the picture mode to said one-picture mode and displaying video that has been displayed in said first region (R) in said single region (S) wherein various operations such as setting various functions, inputting various data and inputting various instructions can be carried out by the user on the video displayed in the operable region.

9. The display control method according to claim 8, further comprising the steps of:
when the picture mode is said one-picture mode, in response to a second operation input from a second operation input portion (BL), changing (S3) the picture mode to said two-picture mode such that said second region (L) becomes smaller than said first region (R), and that said first region (R) becomes smaller than said single region (S), displaying video that has been displayed in said one-picture mode in said first region (R) and new video in said second region (L) and setting said second region (L) to the operable region;
when the picture mode is said two-picture mode and said first region (R) is set to the operable region, in response to said second operation input from said second operation input portion (BL), changing (S5) the operable region to said second region (L);
when the picture mode is said two-picture mode and said second region (L) is set to the operable region, in response to said second operation input from said second operation input portion (BL), increasing (S8) said second region (L) in size and reducing said first region (R) in size; and
when the picture mode is said two-picture mode and said second region (L) attains a maximum size in said two-picture mode, in response to said second operation input from said second operation input portion (BL), changing (S7) the picture mode to said one-picture mode and displaying video that has been displayed in said second region (L) in said single region (S).

10. A display control program that is executable by a computer and controls a one-picture mode in which video is displayed in a single region (S) on a screen (SC) and a two-picture mode in which video is displayed in each of first and second regions (R, L) on said screen (SC), causing said computer to execute the processes of:
when a picture mode is said one-picture mode, in response to a first operation input from a first operation input portion (BR), changing the picture mode to said two-picture mode such that said first region becomes smaller than said second region, and that said second region becomes smaller than said single region, displaying video that has been displayed in said one-picture mode in said second region and new video in said first region and setting said first region to an operable region;
when the picture mode is said two-picture mode and said second region is set to the operable region, in response to said first operation input from said first operation input portion (BR), changing the operable region to said first region;
when the picture mode is said two-picture mode and said first region is set to the operable region, in response to said first operation input from said first operation input portion (BR), increasing said first region in size and reducing said second region in size; and
when the picture mode is said two-picture mode and said first region attains a maximum size in said two-picture mode, in response to said first operation input from said first operation input portion (BR), changing the picture mode to said one-picture mode and displaying video that has been displayed in said first region in said single region wherein various operations such as setting various functions, inputting various data and inputting various instructions can be carried out by the user on the video displayed in the operable region.

## Patentansprüche

1. Anzeigesteuervorrichtung (100), die eine Ein-Bild-Betriebsart, in der Video in einem einzelnen Bereich (S) auf einem Bildschirm (SC) angezeigt ist, und eine Zwei-Bild-Betriebsart steuert, in der Video in jedem aus ersten und zweiten Bereichen (R, L) auf dem Bildschirm (SC) angezeigt ist, mit:
einem ersten Bedienungseingabeabschnitt (BR), der eine durch eine Benutzerbedienung verursachte erste Bedienungseingabe empfängt, und
einem Steuergerät (108), das eine Anzeige des Videos in der Ein-Bild-Betriebsart und der Zwei-Bild-Betriebsart steuert, wobei
das Steuergerät (108),
wenn eine Bildbetriebsart die Ein-Bild-Betriebsart ist, als Reaktion auf die von dem ersten Bedienungseingabeabschnitt (BR) eingegebene erste Bedienung die Bildbetriebsart zu der Zwei-Bild-Betriebsart ändert, so dass der erste Bereich (R) kleiner als der zweite Bereich (L) wird und dass der zweite Bereich (L) kleiner als der einzelne Bereich (S) wird, das Video, das in der Ein-Bild-Betriebsart angezeigt wurde, in dem zweiten Bereich (L) und neues Video in dem ersten Bereich (R) anzeigt, und den ersten Bereich (R) zu einem bedienbaren Bereich einstellt,
wenn die Bildbetriebsart die Zwei-Bild-Betriebsart ist und der zweite Bereich (L) zu dem bedienbaren Bereich eingestellt ist, als Reaktion auf die von dem ersten Bedienungseingabeabschnitt (BR) eingegebene erste Bedienung den bedienbaren Bereich zu dem ersten Bereich (R) ändert,
wenn die Bildbetriebsart die Zwei-Bild-Betriebsart ist und der erste Bereich (R) zu dem bedienbaren Bereich eingestellt ist, als Reaktion auf die von dem ersten Bedienungseingabeabschnitt (BR) eingegebene erste Bedienung den ersten Bereich (R) vergrößert und den zweiten Bereich (L) verkleinert, und
wenn die Bildbetriebsart die Zwei-Bild-Betriebsart ist und der erste Bereich (R) eine maximale Größe in der Zwei-Bild-Betriebsart annimmt, als Reaktion auf die von dem ersten Bedienungseingabeabschnitt (BR) eingegebene erste Bedienung die Bildbetriebsart zu der Ein-Bild-Betriebsart ändert und das Video, das in dem ersten Bereich (R) angezeigt wurde, in dem einzelnen Bereich (S) anzeigt,
wobei verschiedene Bedienungen wie Einstellen verschiedener Funktionen, Eingeben verschiedener Daten und Eingeben verschiedener Anweisungen durch den Benutzer an dem in dem bedienbaren Bereich angezeigten Video durchgeführt werden können.

2. Anzeigesteuervorrichtung (100) nach Anspruch 1, ferner mit einem zweiten Bedienungseingabeabschnitt (BL), der eine durch eine Benutzerbedienung verursachte zweite Bedienungseingabe empfängt, wobei
das Steuergerät (108)
wenn die Bildbetriebsart die Ein-Bild-Betriebsart ist, als Reaktion auf die von dem zweiten Bedienungseingabeabschnitt (BL) eingegebene zweite Bedienung die Bildbetriebsart zu der Zwei-Bild-Betriebsart ändert, so dass der zweite Bereich (L) kleiner als der erste Bereich (R) wird und dass der erste Bereich (R) kleiner als der einzelne Bereich (S) wird, Video, das in der Ein-Bild-Betriebsart angezeigt wurde, in dem ersten Bereich (R) und neues Video in dem zweiten Bereich (L) anzeigt, und den zweiten Bereich (L) zu dem bedienbaren Bereich einstellt,
wenn die Bildbetriebsart die Zwei-Bild-Betriebsart ist und der erste Bereich (R) zu dem bedienbaren Bereich eingestellt ist, als Reaktion auf die von dem zweiten Bedienungseingabeabschnitt (BL) eingegebene zweite Bedienung den bedienbaren Bereich zu dem zweiten Bereich (L) ändert,
wenn die Bildbetriebsart die Zwei-Bild-Betriebsart ist und der zweite Bereich (L) zu dem bedienbaren Bereich eingestellt ist, als Reaktion auf die von dem zweiten Bedienungseingabeabschnitt (BL) eingegebene zweite Bedienung den zweiten Bereich (L) vergrößert und den ersten Bereich (R) verkleinert, und
wenn die Bildbetriebsart die Zwei-Bild-Betriebsart ist und der zweite Bereich (L) eine maximale Größe in der Zwei-Bild-Betriebsart annimmt, als Reaktion auf die von dem zweiten Bedienungseingabeabschnitt (BL) eingegebene zweite Bedienung die Bildbetriebsart zu der Ein-Bild-Betriebsart ändert und das Video, das in dem zweiten Bereich (L) angezeigt wurde, in dem einzelnen Bereich (S) anzeigt.

3. Anzeigesteuervorrichtung (100) nach Anspruch 2, ferner mit einem durch einen Benutzer für eine vorbestimmte Bedienung in dem einzelnen Bereich in der Ein-Bild-Betriebsart und für eine vorbestimmte Bedienung in dem bedienbaren Bereich der ersten und zweiten Bereiche (R, L) in der Zwei-Bild-Betriebsart verwendeten anderen Bedienungseingabeabschnitt, wobei
die ersten und zweiten Bedienungseingabeabschnitte (BR, BL) getrennt von dem anderen Bedienungseingabeabschnitt bereitgestellt sind.

4. Anzeigesteuervorrichtung (100) nach Anspruch 2, die ferner eine Ton ausgebende Tonausgabeeinheit (106) steuert, ferner mit einem Tonbedienungseingabeabschnitt (SP), der eine durch eine Benutzerbedienung verursachte Tonbedienungseingabe empfängt, wobei
das Steuergerät (108) bewirkt, dass Ton entsprechend in dem bedienbaren Bereich angezeigtem Video von der Tonausgabeeinheit (106) als Reaktion auf die von dem Tonbedienungseingabeabschnitt (SP) eingegebene Tonbedienungseingabe ausgegeben wird, wenn die Bildbetriebsart die Zwei-Bild-Betriebsart ist.

5. Anzeigesteuervorrichtung (100) nach Anspruch 2, die ferner eine Ton ausgebende Tonausgabeeinheit (106) steuert, wobei das Steuergerät (108) bewirkt, dass Ton entsprechend in dem bedienbaren Bereich angezeigtem Video von der Tonausgabeeinheit (106) ausgegeben wird, wenn die Bildbetriebsart die Zwei-Bild-Betriebsart ist.

6. Anzeigesteuervorrichtung (100) nach Anspruch 2, die ferner eine Ton ausgebende Tonausgabeeinheit (106) steuert, wobei
das Steuergerät (108) bewirkt, dass Ton entsprechend in dem bedienbaren Bereich angezeigtem Video von der Tonausgabeeinheit (106) als Reaktion auf die von dem ersten oder zweiten Bedienungseingabeabschnitt (BR, BL) eingegebene erste oder zweite Bedienungseingabe ausgegeben wird, wenn die Bildbetriebsart die Zwei-Bild-Betriebsart ist und Ton entsprechend in einem Bereich, der nicht bedienbar ist, angezeigtem Video von der Tonausgabeeinheit (106) ausgegeben wird, und
den ersten Bereich (R) vergrößert und den zweiten Bereich (L) verkleinert als Reaktion auf die von dem ersten Bedienungseingabeabschnitt (BR) eingegebene erste Bedienungseingabe, und den zweiten Bereich (L) vergrößert und den ersten Bereich (R) verkleinert als Reaktion auf die von dem zweiten Bedienungseingabeabschnitt (BL) eingegebene zweite Bedienungseingabe, wenn die Bildbetriebsart die Zwei-Bild-Betriebsart ist und der Ton entsprechend in dem bedienbaren Bereich angezeigtem Video von der Tonausgabeeinheit (106) ausgegeben wird.

7. Anzeigesteuervorrichtung (100) nach Anspruch 2, die ferner eine Ton ausgebende Tonausgabeeinheit (106) steuert, wobei das Steuergerät (108) bewirkt, dass Ton entsprechend in der Ein-Bild-Betriebsart angezeigtem Video von der Tonausgabeeinheit (106) ausgegeben wird, wenn die Bildbetriebsart von der Zwei-Bild-Betriebsart zu der Ein-Bild-Betriebsart geändert wird.

8. Anzeigesteuerverfahren zum Steuern einer Ein-Bild-Betriebsart, in der Video in einem einzelnen Bereich (S) auf einem Bildschirm (SC) angezeigt wird, und einer Zwei-Bild-Betriebsart, in der Video in jedem aus ersten und zweiten Bereichen (R, L) auf dem Bildschirm (SC) angezeigt wird, mit den Schritten:
wenn eine Bildbetriebsart die Ein-Bild-Betriebsart ist, als Reaktion auf eine von einem ersten Bedienungseingabeabschnitt (BR) eingegebene erste Bedienung, Ändern (S3) der Bildbetriebsart zu der Zwei-Bild-Betriebsart, so dass der erste Bereich (R) kleiner als der zweite Bereich (L) wird und dass der zweite Bereich (L) kleiner als der einzelne Bereich (S) wird, Anzeigen von Video, das in der Ein-Bild-Betriebsart angezeigt wurde, in dem zweiten Bereich (L), und von neuem Video in dem ersten Bereich (R), und Einstellen des ersten Bereichs (R) zu einem bedienbaren Bereich,
wenn die Bildbetriebsart die Zwei-Bild-Betriebsart ist und der zweite Bereich (L) zu dem bedienbaren Bereich eingestellt ist, als Reaktion auf die von dem ersten Bedienungseingabeabschnitt (BR) eingegebene erste Bedienung, Ändern (S5) des bedienbaren Bereichs zu dem ersten Bereich (R),
wenn die Bildbetriebsart die Zwei-Bild-Betriebsart ist und der erste Bereich (R) zu dem bedienbaren Bereich eingestellt ist, als Reaktion auf die von dem ersten Bedienungseingabeabschnitt (BR) eingegebene erste Bedienung, Vergrößern (S8) des ersten Bereichs (R) und Verkleinern des zweiten Bereichs (L), und
wenn die Bildbetriebsart die Zwei-Bild-Betriebsart ist und der erste Bereich (R) eine maximale Größe in der Zwei-Bild-Betriebsart annimmt, als Reaktion auf die von dem ersten Bedienungseingabeabschnitt (BR) eingegebene erste Bedienung, Ändern (S7) der Bildbetriebsart zu der Ein-Bild-Betriebsart und Anzeigen von Video, das in dem ersten Bereich (R) angezeigt wurde, in dem einzelnen Bereich (S),
wobei verschiedene Bedienungen wie Einstellen verschiedener Funktionen, Eingeben verschiedener Daten und Eingeben verschiedener Anweisungen durch den Benutzer an dem in dem bedienbaren Bereich angezeigten Video durchgeführt werden können.

9. Anzeigesteuerverfahren nach Anspruch 8, ferner mit den Schritten:
wenn die Bildbetriebsart die Ein-Bild-Betriebsart ist, als Reaktion auf eine von dem zweiten Bedienungseingabeabschnitt (BL) eingegebene zweite Bedienung, Ändern (S3) der Bildbetriebsart zu der Zwei-Bild-Betriebsart, so dass der zweite Bereich (L) kleiner als der erste Bereich (R) wird und dass der erste Bereich (R) kleiner als der einzelne Bereich (S) wird, Anzeigen von Video, das in der Ein-Bild-Betriebsart angezeigt wurde, in dem ersten Bereich (R) und von neuem Video in dem zweiten Bereich (L), und Einstellen des zweiten Bereichs (L) zu dem bedienbaren Bereich,
wenn die Bildbetriebsart die Zwei-Bild-Betriebsart ist und der erste Bereich (R) zu dem bedienbaren Bereich eingestellt ist, als Reaktion auf die von dem zweiten Bedienungseingabeabschnitt (BL) eingegebene zweite Bedienung, Ändern (S5) des bedienbaren Bereichs zu dem zweiten Bereich (L),
wenn die Bildbetriebsart die Zwei-Bild-Betriebsart ist und der zweite Bereich (L) zu dem bedienbaren Bereich eingestellt ist, als Reaktion auf die von dem zweiten Bedienungseingabeabschnitt (BL) eingegebene zweite Bedienung, Vergrößern (S8) des zweiten Bereichs (L) und Verkleinern des ersten Bereichs (R), und
wenn die Bildbetriebsart die Zwei-Bild-Betriebsart ist und der zweite Bereich (L) eine maximale Größe in der Zwei-Bild-Betriebsart annimmt, als Reaktion auf die von dem zweiten Bedienungseingabeabschnitt (BL) eingegebene zweite Bedienung, Ändern (S7) der Bildbetriebsart zu der Ein-Bild-Betriebsart und Anzeigen von Video, das in dem zweiten Bereich (L) angezeigt wurde, in dem einzelnen Bereich (S).

10. Anzeigesteuerprogramm, das durch einen Computer ausführbar ist, und eine Ein-Bild-Betriebsart, in der Video in einem einzelnen Bereich (S) auf einem Bildschirm (SC) angezeigt wird, und eine Zwei-Bild-Betriebsart steuert, in der Video in jedem aus ersten und zweiten Bereichen (R, L) auf dem Bildschirm (SC) angezeigt wird, wobei das Programm den Computer dazu bringt, die folgenden Prozesse auszuführen:
wenn eine Bildbetriebsart die Ein-Bild-Betriebsart ist, als Reaktion auf eine von einem ersten Bedienungseingabeabschnitt (BR) eingegebene erste Bedienung, Ändern der Bildbetriebsart zu der Zwei-Bild-Betriebsart, so dass der erste Bereich kleiner als der zweite Bereich wird und dass der zweite Bereich kleiner als der einzelne Bereich wird, Anzeigen von Video, das in der Ein-Bild-Betriebsart angezeigt wurde, in dem zweiten Bereich, und von neuem Video in dem ersten Bereich, und Einstellen des ersten Bereichs zu einem bedienbaren Bereich,
wenn die Bildbetriebsart die Zwei-Bild-Betriebsart ist und der zweite Bereich zu dem bedienbaren Bereich eingestellt ist, als Reaktion auf die von dem ersten Bedienungseingabeabschnitt (BR) eingegebene erste Bedienung, Ändern des bedienbaren Bereichs zu dem ersten Bereich,
wenn die Bildbetriebsart die Zwei-Bild-Betriebsart ist und der erste Bereich zu dem bedienbaren Bereich eingestellt ist, als Reaktion auf die von dem ersten Bedienungseingabeabschnitt (BR) eingegebene erste Bedienung, Vergrößern des ersten Bereichs und Verkleinern des zweiten Bereichs, und
wenn die Bildbetriebsart die Zwei-Bild-Betriebsart ist und der erste Bereich eine maximale Größe in der Zwei-Bild-Betriebsart annimmt, als Reaktion auf die von dem ersten Bedienungseingabeabschnitt (BR) eingegebene erste Bedienung, Ändern der Bildbetriebsart zu der Ein-Bild-Betriebsart und Anzeigen von Video, das in dem ersten Bereich angezeigt wurde, in dem einzelnen Bereich,
wobei verschiedene Bedienungen wie Einstellen verschiedener Funktionen, Eingeben verschiedener Daten und Eingeben verschiedener Anweisungen durch den Benutzer an dem in dem bedienbaren Bereich angezeigten Video durchgeführt werden können.

## Revendications

1. Dispositif de commande d'affichage (100) qui commande un mode à une image où une vidéo est affichée dans une zone unique (S) sur un écran (SC) et un mode à deux images où une vidéo est affichée dans chacune des première et deuxième zones (R, L) sur ledit écran (SC), comprenant :
une première partie d'entrée d'opération (BR) qui reçoit une première entrée d'opération provoquée par une opération d'utilisateur ; et
une unité de commande (108) qui commande l'affichage de la vidéo dans ledit mode à une image et ledit mode à deux images, où
ladite unité de commande (108),
lorsqu'un mode d'image est ledit mode à une image, en réponse à ladite première entrée d'opération provenant de ladite première partie d'entrée d'opération (BR), change le mode d'image audit mode à deux images de sorte que ladite première zone (R) devienne plus petite que ladite deuxième zone (L), et que ladite deuxième zone (L) devienne plus petite que ladite zone unique (S), affiche la vidéo qui a été affichée dans ledit mode à une image dans ladite deuxième zone (L) et la nouvelle vidéo dans ladite première zone (R) et règle ladite première zone (R) à une zone de fonctionnement,
lorsque le mode d'image est ledit mode à deux images et ladite deuxième zone (L) est réglée à la zone de fonctionnement, en réponse à ladite première entrée d'opération provenant de ladite première partie d'entrée d'opération (BR), change la zone de fonctionnement à ladite première zone (R),
lorsque le mode d'image est ledit mode à deux images et ladite première zone (R) est réglée à la zone de fonctionnement, en réponse à ladite première entrée d'opération provenant de ladite première partie d'entrée d'opération (BR), augmente la dimension de ladite première zone (R) et réduit la dimension de ladite deuxième zone (L), et
lorsque le mode d'image est ledit mode à deux images et ladite première zone (R) atteint une dimension maximale dans ledit mode à deux images, en réponse à ladite première entrée d'opération provenant de ladite première partie d'entrée d'opération (BR), change le mode d'image audit mode à une image et affiche la vidéo qui a été affichée dans ladite première zone (R) dans ladite zone unique (S), où des diverses opérations telles que le réglage des diverses fonctions, l'introduction des diverses données et l'introduction des diverses instructions peuvent être effectuées par l'utilisateur sur la vidéo affichée dans la zone de fonctionnement.

2. Dispositif de commande d'affichage (100) selon la revendication 1, comprenant en outre une deuxième partie d'entrée d'opération (BL) qui reçoit une deuxième entrée d'opération provoquée par une opération d'utilisateur, où
ladite unité de commande (108),
lorsque le mode d'image est ledit mode à une image, en réponse à ladite deuxième entrée d'opération provenant de ladite deuxième partie d'entrée d'opération (BL), change le mode d'image audit mode à deux images de sorte que ladite deuxième zone (L) devienne plus petite que ladite première zone (R), et que ladite première zone (R) devienne plus petite que ladite zone unique (S), affiche une vidéo qui a été affichée dans ledit mode à une image dans ladite première zone (R) et la nouvelle vidéo dans ladite deuxième zone (L) et règle ladite deuxième zone (L) à la zone de fonctionnement,
lorsque le mode d'image est ledit mode à deux images et ladite première zone (R) est réglée à la zone de fonctionnement, en réponse à ladite deuxième entrée d'opération provenant de ladite deuxième partie d'entrée d'opération (BL), change la zone de fonctionnement à ladite deuxième zone (L),
lorsque le mode d'image est ledit mode à deux images et ladite deuxième zone (L) est réglée à la zone de fonctionnement, en réponse à ladite deuxième entrée d'opération provenant de ladite deuxième partie d'entrée d'opération (BL), augmente la dimension de ladite deuxième zone (L) et réduit la dimension de ladite première zone (R), et
lorsque le mode d'image est ledit mode à deux images et ladite deuxième zone (L) atteint une dimension maximale dans ledit mode à deux images, en réponse à ladite deuxième entrée d'opération provenant de ladite deuxième partie d'entrée d'opération (BL), change le mode d'image audit mode à une image et affiche la vidéo qui a été affichée dans ladite deuxième zone (L) dans ladite zone unique (S).

3. Dispositif de commande d'affichage (100) selon la revendication 2, comprenant en outre une autre partie d'entrée d'opération utilisée par un utilisateur pour une opération prédéterminée dans ladite zone unique dans ledit mode à une image et pour une opération prédéterminée dans la zone de fonctionnement desdites première et deuxième zones (R, L) dans ledit mode à deux images, où
lesdites première et deuxième parties d'entrée d'opération (BR, BL) sont prévues séparément de ladite autre partie d'entrée d'opération.

4. Dispositif de commande d'affichage (100) selon la revendication 2, commandant en outre une unité de sortie de son (106) qui délivre en sortie un son et comprenant en outre une partie d'entrée d'opération de son (SP) qui reçoit une entrée d'opération de son provoquée par une opération d'utilisateur, où
ladite unité de commande (108) amène un son correspondant à une vidéo affichée dans la zone de fonctionnement à être délivré en sortie par ladite unité de sortie de son (106) en réponse à ladite entrée d'opération de son provenant de ladite partie d'entrée d'opération de son (SP) lorsque le mode d'image est ledit mode à deux images.

5. Dispositif de commande d'affichage (100) selon la revendication 2, commandant en outre une unité de sortie de son (106) qui délivre en sortie un son, où ladite unité de commande (108) amène un son correspondant à une vidéo affichée dans la zone de fonctionnement à être délivré en sortie par ladite unité de sortie de son (106) lorsque le mode d'image est ledit mode à deux images.

6. Dispositif de commande d'affichage (100) selon la revendication 2, commandant en outre une unité de sortie de son (106) qui délivre en sortie un son, où
ladite unité de commande (108) amène un son correspondant à une vidéo affichée dans la zone de fonctionnement à être délivré en sortie par ladite unité de sortie de son (106) en réponse à ladite première ou deuxième entrée d'opération (BR, BL) provenant de ladite première ou deuxième partie d'entrée d'opération lorsque le mode d'image est ledit mode à deux images et un son correspondant à une vidéo affichée dans une zone qui n'est pas de fonctionnement est délivré en sortie par ladite unité de sortie de son (106), et
augmente la dimension de ladite première zone (R) et réduit la dimension de ladite deuxième zone (L) en réponse à ladite première entrée d'opération provenant de ladite première partie d'entrée d'opération (BR), et augmente la dimension de ladite deuxième zone (L) et réduit la dimension de ladite première zone (R) en réponse à ladite deuxième entrée d'opération provenant de ladite deuxième partie d'entrée d'opération (BL) lorsque le mode d'image est ledit mode à deux images et le son correspondant à la vidéo affichée dans la zone de fonctionnement est délivré en sortie par ladite unité de sortie de son (106).

7. Dispositif de commande d'affichage (100) selon la revendication 2, commandant en outre une unité de sortie de son (106) qui délivre en sortie un son, où ladite unité de commande (108) amène un son correspondant à une vidéo affichée dans ledit mode à une image à être délivré en sortie par ladite unité de sortie de son (106) lorsque le mode d'image est changé dudit mode à deux images audit mode à une image.

8. Procédé de commande d'affichage permettant de commander un mode à une image où une vidéo est affichée dans une zone unique (S) sur un écran (SC) et un mode à deux images où une vidéo est affichée dans chacune des première et deuxième zones (R, L) sur ledit écran (SC), comprenant les étapes qui consistent :
à changer (S3), lorsqu'un mode d'image est ledit mode à une image, en réponse à une première entrée d'opération provenant d'une première partie d'entrée d'opération (BR), le mode d'image audit mode à deux images de sorte que ladite première zone (R) devienne plus petite que ladite deuxième zone (L), et que ladite deuxième zone (L) devienne plus petite que ladite zone unique (S), à afficher une vidéo qui a été affichée dans ledit mode à une image dans ladite deuxième zone (L) et la nouvelle vidéo dans ladite première zone (R) et à régler ladite première zone (R) à une zone de fonctionnement ;
à changer (S5), lorsque le mode d'image est ledit mode à deux images et ladite deuxième zone (L) est réglée à la zone de fonctionnement, en réponse à ladite première entrée d'opération provenant de ladite première partie d'entrée d'opération (BR), la zone de fonctionnement à ladite première zone (R) ;
à augmenter (S8), lorsque le mode d'image est ledit mode à deux images et ladite première zone (R) est réglée à la zone de fonctionnement, en réponse à ladite première entrée d'opération provenant de ladite première partie d'entrée d'opération (BR), la dimension de ladite première zone (R) et à réduire la dimension de ladite deuxième zone (L) ; et
à changer (S7), lorsque le mode d'image est ledit mode à deux images et ladite première zone (R) atteint une dimension maximale dans ledit mode à deux images, en réponse à ladite première entrée d'opération provenant de ladite première partie d'entrée d'opération (BR), le mode d'image audit mode à une image et à afficher une vidéo qui a été affichée dans ladite première zone (R) dans ladite zone unique (S), où des diverses opérations telles que le réglage des diverses fonctions, l'introduction des diverses données et l'introduction des diverses instructions peuvent être effectuées par l'utilisateur sur la vidéo affichée dans la zone de fonctionnement.

9. Procédé de commande d'affichage selon la revendication 8, comprenant en outre les étapes qui consistent :
à changer (S3), lorsque le mode d'image est ledit mode à une image, en réponse à une deuxième entrée d'opération provenant d'une deuxième partie d'entrée d'opération (BL), le mode d'image audit mode à deux images de sorte que ladite deuxième zone (L) devienne plus petite que ladite première zone (R), et que ladite première zone (R) devienne plus petite que ladite zone unique (S), à afficher une vidéo qui a été affichée dans ledit mode à une image dans ladite première zone (R) et la nouvelle vidéo dans ladite deuxième zone (L) et à régler ladite deuxième zone (L) à la zone de fonctionnement ;
à changer (S5), lorsque le mode d'image est ledit mode à deux images et ladite première zone (R) est réglée à la zone de fonctionnement, en réponse à ladite deuxième entrée d'opération provenant de ladite deuxième partie d'entrée d'opération (BL), la zone de fonctionnement à ladite deuxième zone (L) ;
à augmenter (S8), lorsque le mode d'image est ledit mode à deux images et ladite deuxième zone (L) est réglée à la zone de fonctionnement, en réponse à ladite deuxième entrée d'opération provenant de ladite deuxième partie d'entrée d'opération (BL), la dimension de ladite deuxième zone (L) et à réduire la dimension de ladite première zone (R) ; et
à changer (S7), lorsque le mode d'image est ledit mode à deux images et ladite deuxième zone (L) atteint une dimension maximale dans ledit mode à deux images, en réponse à ladite deuxième entrée d'opération provenant de ladite deuxième partie d'entrée d'opération (BL), le mode d'image audit mode à une image et à afficher une vidéo qui a été affichée dans ladite deuxième zone (L) dans ladite zone unique (S).

10. Programme de commande d'affichage qui peut être exécuté par un ordinateur et qui commande un mode à une image où une vidéo est affichée dans une zone unique (S) sur un écran (SC) et un mode à deux images où une vidéo est affichée dans chacune des première et deuxième zones (R, L) sur ledit écran (SC), amenant ledit ordinateur à exécuter le processus qui consiste :
à changer, lorsqu'un mode d'image est ledit mode à une image, en réponse à une première entrée d'opération provenant d'une première partie d'entrée d'opération (BR), le mode d'image audit mode à deux images de sorte que ladite première zone devienne plus petite que ladite deuxième zone, et que ladite deuxième zone devienne plus petite que ladite zone unique, à afficher une vidéo qui a été affichée dans ledit mode à une image dans ladite deuxième zone et une nouvelle vidéo dans ladite première zone et à régler ladite première zone à une zone de fonctionnement ;
à changer, lorsque le mode d'image est ledit mode à deux images et ladite deuxième zone est réglée à la zone de fonctionnement, en réponse à ladite première entrée d'opération provenant de ladite première partie d'entrée d'opération (BR), la zone de fonctionnement à ladite première zone ;
à augmenter, lorsque le mode d'image est ledit mode à deux images et ladite première zone est réglée à la zone de fonctionnement, en réponse à ladite première entrée d'opération provenant de ladite première partie d'entrée d'opération (BR), la dimension de ladite première zone et à réduire la dimension de ladite deuxième zone ; et
à changer, lorsque le mode d'image est ledit mode à deux images et ladite première zone atteint une dimension maximale dans ledit mode à deux images, en réponse à ladite première entrée d'opération provenant de ladite première partie d'entrée d'opération (BR), le mode d'image audit mode à une image et à afficher une vidéo qui a été affichée dans ladite première zone dans ladite zone unique, où des diverses opérations telles que le réglage des diverses fonctions, l'introduction des diverses données et l'introduction des diverses instructions peuvent être effectuées par l'utilisateur sur la vidéo affichée dans la zone de fonctionnement.
